# EUROPEAN PATENT SPECIFICATION

(11) **EP 2 224 653 B1**
(45) Date of publication and mention of the grant of the patent: **08.06.2011**
(21) Application number: 09153827.2
(22) Date of filing: 26.02.2009
(51) Int. Cl.: H04L 12/58

(54) **System and method for switching between messaging clients**
System und Verfahren zum Schalten zwischen Nachrichten-Clients
Procédé et système de commutation entre clients de messagerie

(43) Date of publication of application: 01.09.2010
(60) Divisional application: 10168372.0
(73) Proprietor: RESEARCH IN MOTION LIMITED, Waterloo, Ontario N2L 3W8 (CA)
(72) Inventor: Vymenets, Leonid, Mississauga, Ontario L4W OB5 (CA); Chen, Henry Yao-Tsu, Waterloo Ontario N2K 4B4 (CA)
(74) Representative: Rickard, David John

(56) References cited:
- US-A1- 2004 019 695
- US-A1- 2006 031 370
- US-A1- 2006 168 204
- US-A1- 2007 162 605
- US-A1- 2008 301 230

## Description

### TECHNICAL FIELD

The following relates to switching between messaging clients.

### DESCRIPTION OF THE RELATED ART

Instant messaging (IM) has become a convenient and popular way of communicating between users, whether using mobile devices, personal computers or both. As a result, the number of IM applications or IM clients, has increased dramatically. Many devices, for example, allow a user to communicate through multiple different IM clients. When a user has access to several different IM clients, the user may switch between the IM clients or even other messaging clients such as short-message-service (SMS) to select the preferred mode of conversation. For example, a user may wish to interact with a contact using one IM client. Later on, the user may prefer to interact with the same contact using another IM client. The user's preference for the default mode of communication, or IM client, may vary depending on the contact and may also depend on external factors including, for example, time of day and location.

In some instances, the user may want to switch between different IM clients during an active IM conversation, and to continue the flow of conversation with the same contact, the user may want to promptly switch between the current IM client to another IM client. Switching between different IM clients can cause confusion for the user and can be difficult to track.
US2007/162605 discloses a method, apparatus and computer-usable medium for the steps of establishing a first Instant messaging (IM) session with a first user login identifier (ID) on a first client device with a first network routing address; and, when a request to establish a next IM session with the same first user login ID is received from a second client device while the first IM session is active, dynamically enabling a seamless continuation of the first IM session on the second client device. The above steps are completed within a computing environment having multiple client devices, each configured with an IM utility.
US2006/031370 discloses a method for indicating a communication availability of a first instant messaging user to a second instant messaging user. A graphical parameter of a graphical feature for display on a user interface of the second instant messaging user is set in one of a plurality of states according to the communication availability of the first instant messaging user. A user state and a user location of the first instant messaging user are displayed on the user interface of the second instant messaging user in response to a selection of the displayed graphical feature by the second instant messaging user. One or more alternative communication methods for communicating with the first instant messaging user are displayed on the user interface of the second instant messaging user in accordance with a communication policy defined by the first instant messaging user.
US2006/168204 discloses techniques for forwarding an instant message addressed to an intended instant message recipient to the recipient's mobile telephone. Techniques are also described for prohibiting the forwarding of an instant message addressed to an intended message recipient to the recipient's mobile telephone. Further techniques are provided for updating an intended message recipient's on-line presence information (and/or reflecting the same) to indicate that the intended message recipient prohibits message forwarding to the potential message recipient's mobile telephone or to indicate that the intended message recipient's mobile telephone is unavailable to receive a communication.
US2004/019695 discloses a system, method, and computer program product enable instant messaging systems to use alternative message delivery mechanisms. Recipients may register one or more alternative message delivery mechanisms, such as cell phones, pagers, etc., through which they are available as an alternative to an instant messaging system. Constraints may be added to these registered alternatives, such as specifying a limitation on days of the week and/or hours of the day when a particular alternative may be used. Providing that an alternative messaging mechanism is registered, and any constraints for this alternative are satisfied, the present extended instant messaging system selects the most suitable alternative forwarding mechanisms, and delivers the messages to the intended recipients.
US2008/301230 discloses a method, apparatus and system for instant message routing. The method includes: receiving a communication request from a source client to a destination client; acquiring the context associated with the source client and the destination client; and selecting a sub-user of the destination client for communication using a policy according to the context. When a source client requests communication with a virtual user, the method can route the communication request using a policy according to the context, to a sub-user of the virtual user which once communicated with the source client.

### GENERAL

There may be provided a method, computer readable medium, and mobile device for switching between messaging clients by providing on a first communication device, a plurality of messaging clients for exchanging messages with one or more other communication devices; enabling an exchange of messages between the first communication device and a second communication device using one of the plurality of messaging clients; monitoring connectivity information pertaining to the messaging clients during the exchange of messages; and upon detecting that the first and second communication devices are no longer connected by the one of the plurality of messaging clients, displaying a list of standby messaging clients to enable selection of another of the plurality of messaging clients to continue the exchange of messages.

### BRIEF DESCRIPTION OF THE DRAWINGS

Embodiments will now be described by way of example only with reference to the appended drawings wherein:

Figure 1 is a system diagram illustrating the environment in which communications are made between a host system and a mobile device.

Figure 2 is a plan view of a mobile device and a display screen therefor.

Figure 3 is a plan view of another mobile device and a display screen therefor.

Figure 4 is a plan view of another mobile device and a display screen therefor.

Figure 5 is a horizontal cross-sectional view of the mobile device shown in Figure 4.

Figure 6 is a block diagram of an exemplary embodiment of a mobile device.

Figure 7 is a block diagram of an exemplary embodiment of a communication subsystem component of the mobile device of Figure 4.

Figure 8 is a screen shot of a home screen displayed by the mobile device.

Figure 9 is a block diagram illustrating exemplary ones of the other software applications and components shown in Figure 4.

Figure 10 is a system diagram showing one configuration for instant messaging (IM) on multiple platforms.

Figure 11 is a system diagram showing one configuration of an IM application that manages messaging clients.

Figure 12 is a screen shot of an example user interface (UI) for a messaging contact list for User A.

Figure 13 is a screen shot of the UI shown in Figure 12 displaying a messaging client toggle list activated upon selection of a default messaging icon.

Figure 14 is a screen shot of the UI shown in Figure 12 displaying a different default messaging client for User B upon selection in the toggle list shown in Figure 13.

Figure 15 is a flow diagram illustrating computer executable operations concurrent with user input for toggling between messaging clients using a toggle list.

Figure 16 is a screen shot of an example UI providing a contact list for User A.

Figure 17 is a screen shot of the UI shown in Figure 16 displaying a selection box for messaging clients activated upon selection of a default messaging icon.

Figure 18 is a screen shot of the UI shown in Figure 16 displaying a different default messaging client for User B upon selection in the selection box shown in Figure 17.

Figure 19 is a flow diagram illustrating computer executable operations concurrent with user input for toggling between messaging clients using a selection box.

Figure 20 is another flow diagram illustrating computer executable operations concurrent with user input for toggling between messaging clients using a selection box.

Figure 21 is a screen shot of an example UI displaying a conversation window between User A and User B.

Figure 22 is a screen shot of a UI shown in Figure 20 displaying a Standby client window upon User B logging off a conversation.

Figure 23 is a screen shot of a UI shown in Figure 20 displaying a different messaging client upon selection in the Standby client window shown in Figure 21.

Figure 24 is a flow diagram illustrating computer executable operations concurrent with user inputs for toggling a standby option using a Standby client window.

Figure 25 is an alternative embodiment of the flow diagram shown in Figure 24 illustrating computer executable operations concurrent with user inputs for toggling a standby option using a Standby client window.

Figure 26 is a screen shot of a UI displaying a conversation window between User A and User B, wherein the conversation window comprises a "Switch Conversation" button.

Figure 27 is a screen shot of a UI shown in Figure 26 displaying a drop down list of active conversations upon selection of the "Switch Conversation" button.

Figure 28 is a screen shot of a UI shown in Figure 27 displaying a messaging client toggle list activated upon selection of an icon for User C.

Figure 29 is a screen shot of a UI shown in Figure 28 displaying a different conversation window between User A and User C upon selection of a messaging client from the messaging client toggle list.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

Instant messaging (IM) users may utilize multiple IM clients and thus, multiple contact lists. Managing these multiple contact lists and switching between different IM clients can be difficult and confusing. Moreover, users have multiple ways in which to message with a given contact on their contact list and different contacts may be messaged using different IM clients, and event other types of messaging clients such as SMS. Thus, moving between different conversations in different IM and other messaging clients with the same contact can be inconvenient.

A unified messaging contact list, which comprises a single entry for each contact, can allow a user to initiate a conversation in any of the available messaging types, including IM clients and other messaging clients. Examples of such messaging types and clients comprise: SMS, MMS, peer-to-peer (P2P) or pin-to-pin type messaging, as well as commercially available third party IM clients such as Google Talk™, AOL™ Messenger, and Yahoo!™ Messenger. This list is not meant to be exhaustive and it will be appreciated that the principles herein described are also applicable to other messaging types. It is noted that the following embodiments may describe IM as well as SMS and other messaging types, which may collectively be referred to as messaging clients, which encompasses any form of messaging involves the exchange of data such as through an exchange of messages.

To enable initiation of a conversation in a desired mode, a default messaging client can be specified. A default messaging client refers to a configuration where such client is preset to be automatically used when the user initiates a conversation with a desired contact. In some embodiments, the contacts list can enable, upon scrolling from side-to-side, instant toggling between messaging clients to immediately and directly set a new default mode. In other embodiments, the contacts list can provide a collapsible tree structure to show standby modes (i.e. non-default messaging modes), which also allows for a new default mode to be immediately toggled and then activated.

User preferences defining a set of one or more rules can also be set or defined to provide more intelligence for the toggling mechanism or for automatically switching from one messaging client to another messaging client, for example, by considering factors such as time of day, location of the communication device, wireless signal strength, user presence information, etc.

During an active exchange of messages between a user and a contact, the quick toggling of the default mode by selecting a desired default client can also be implemented. For example, the user may instantly toggle away from a current messaging client to a different standby messaging client when the contact, either intentionally or inadvertently, logs off from the current exchange of messages. This allows the user to seamlessly continue exchanging messages with the contact using the standby messaging client. It is appreciated that a standby messaging client refers to a messaging client that is capable of being used, but is currently not in use, e.g. an active connection exists with at least another communication device using such a standby client.

Although the following examples are presented in the context of mobile communication devices, the principles may equally be applied to other devices such as applications running on personal computers and the like where appropriate.

For clarity in the discussion below, communication devices will be commonly referred to as "mobile devices". Examples of applicable mobile devices include pagers, cellular phones, cellular smart-phones, wireless organizers, personal digital assistants, computers, laptops, handheld wireless communication devices, wirelessly enabled notebook computers and the like.

In a typical embodiment, the mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

The mobile device may be one that is used in a system that is configured for continuously routing all forms of pushed information from a host system to the mobile device. One example of such a system will now be described.

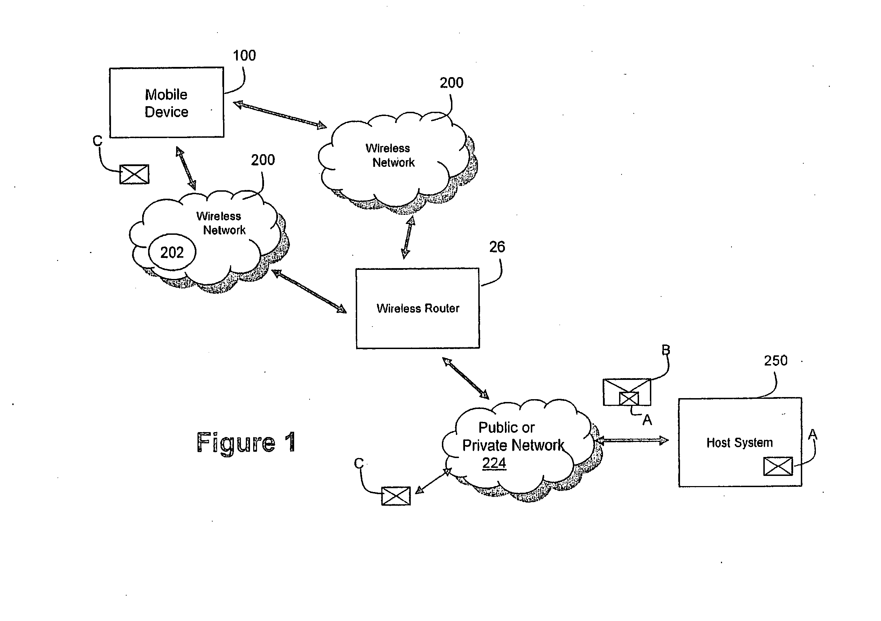

Referring now to the drawings, Figure 1 is an example system diagram showing the redirection of user data items (such as message A or C) from a corporate enterprise computer system (host system) 250 to the user's mobile device 100 via a wireless router 26. The wireless router 26 provides the wireless connectivity functionality as it acts to both abstract most of the wireless network's 200 complexities, and it also implements features necessary to support pushing data to the mobile device 100. Although not shown, a plurality of mobile devices may access data from the host system 250. In this example, message A in Figure 1 represents an internal message sent from, e.g. a desktop computer within the host system 250, to any number of server computers in the corporate network 260 (e.g. LAN), which may, in general, include a database server, a calendar server, an E-mail server or a voice-mail server.

Message C in Figure 1 represents an external message from a sender that is not directly connected to the host system 250, such as the user's mobile device 100, some other user's mobile device (not shown), or any user connected to the public or private network 224 (e.g. the Internet). Message C could be e-mail, voice-mail, calendar information, database updates, web-page updates or could even represent a command message from the user's mobile device 100 to the host system 250. The host system 250 may comprise, along with the typical communication links, hardware and software associated with a corporate enterprise computer network system, one or more wireless mobility agents, a TCP/IP connection, a collection of data stores, (for example a data store for e-mail could be an off-the-shelf mail server like Microsoft Exchange® Server or Lotus Notes® Server), all within and behind a corporate firewall.

The mobile device 100 may be adapted for communication within wireless network 200 via wireless links, as required by each wireless network 200 being used. As an illustrative example of the operation for a wireless router 26 shown in Figure 1, consider a data item A, repackaged in outer envelope B (the packaged data item A now referred to as "data item (A)") and sent to the mobile device 100 from an Application Service Provider (ASP) in the host system 250. Within the ASP is a computer program, similar to a wireless mobility agent, running on any computer in the ASP's environment that is sending requested data items from a data store to a mobile device 100. The mobile-destined data item (A) is routed through the network 224, and through a firewall protecting the wireless router 26.

Although the above describes the host system 250 as being used within a corporate enterprise network environment, this is just one embodiment of one type of host service that offers push-based messages for a handheld wireless device that is capable of notifying and preferably presenting the data to the user in real-time at the mobile device when data arrives at the host system.

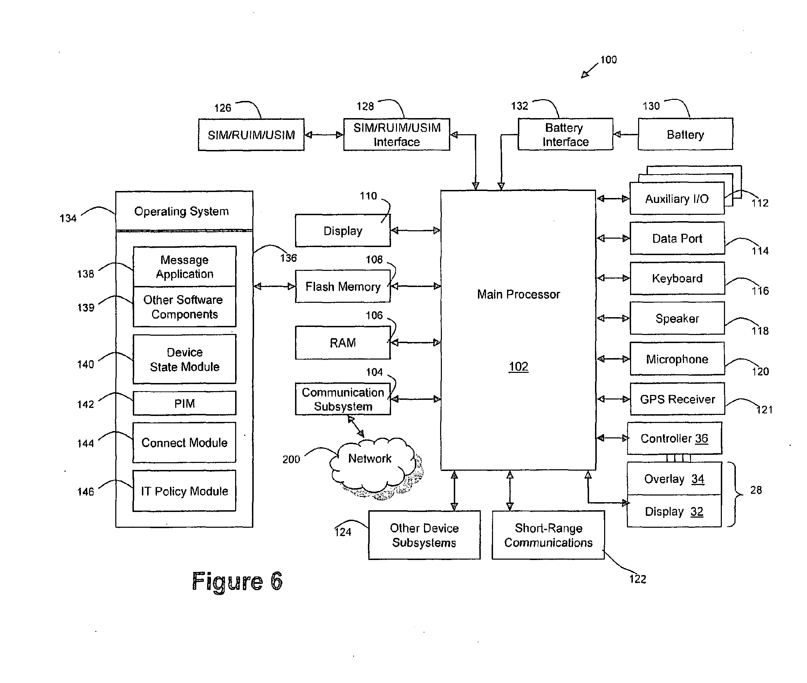

By offering a wireless router 26 (sometimes referred to as a "relay"), there are a number of major advantages to both the host system 250 and the wireless network 200. The host system 250 in general runs a host service that is considered to be any computer program that is running on one or more computer systems. The host service is said to be running on a host system 250, and one host system 250 can support any number of host services. A host service may or may not be aware of the fact that information is being channelled to mobile devices 100. For example an e-mail or message program 138 (see Figure 6) might be receiving and processing e-mail while an associated program (e.g. an e-mail wireless mobility agent) is also monitoring the mailbox for the user and forwarding or pushing the same e-mail to a wireless device 100. A host service might also be modified to prepare and exchange information with mobile devices 100 via the wireless router 26, like customer relationship management software. In a third example, there might be a common access to a range of host services. For example a mobility agent might offer a Wireless Access Protocol (WAP) connection to several databases.

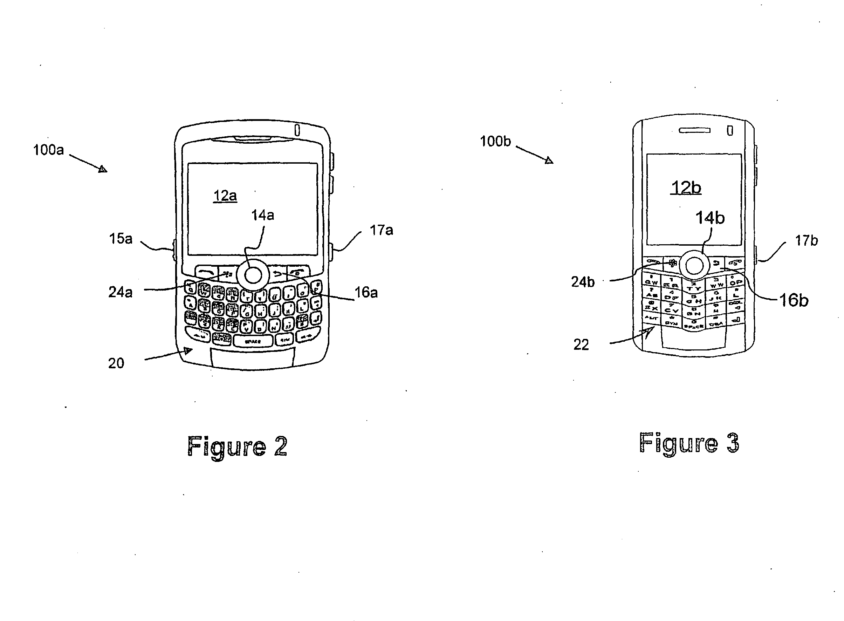

As discussed above, a mobile device 100 may be a hand-held two-way wireless paging computer as exemplified in Figures 2-10, a wirelessly enabled palm-top computer, a mobile telephone with data messaging capabilities, a PDA with mobile phone capabilities, a wirelessly enabled laptop computer, a vending machine with an associated OEM radio modem, a wirelessly-enabled heart-monitoring system or, alternatively, it could be other types of mobile data communication devices capable of sending and receiving messages via a network connection. Although the system is exemplified as operating in a two-way communications mode, certain aspects of the system could be used in a "one and one-half' or acknowledgment paging environment, or even with a one-way paging system. In such limited data messaging environments, the wireless router 26 still could abstract the mobile device 100 and wireless network 200, offer push services to standard web-based server systems and allow a host service in a host system 250 to reach the mobile device 100 in many countries.

The host system 250 shown herein has many methods when establishing a communication link to the wireless router 26. For one skilled in the art of data communications the host system 250 could use connection protocols like TCP/IP, X.25, Frame Relay, ISDN, ATM or many other protocols to establish a point-to-point connection. Over this connection there are several tunneling methods available to package and send the data, some of these include: HTTP/HTML, HTTP/XML, HTTP/Proprietary, FTP, SMTP or some other proprietary data exchange protocol. The type of host systems 250 that might employ the wireless router 26 to perform push could include: field service applications, e-mail services, stock quote services, banking services, stock trading services, field sales applications, advertising messages and many others. This wireless network 200 abstraction is made possible by the wireless router 26, which implements this routing and push functionality. The type of user-selected data items being exchanged by the host could include: E-mail messages, calendar events, meeting notifications, address entries, journal entries, personal alerts, alarms, warnings, stock quotes, news bulletins, bank account transactions, field service updates, stock trades, heart-monitoring information, vending machine stock levels, meter reading data, GPS data, etc., but could, alternatively, include any other type of message that is transmitted to the host system 250, or that the host system 250 acquires through the use of intelligent agents, such as data that is received after the host system 250 initiates a search of a database or a website or a bulletin board.

The wireless router 26 provides a range of services to make creating a push-based host service possible. These networks may comprise: (1) the Code Division Multiple Access (CDMA) network, (2) the Groupe Special Mobile or the Global System for Mobile Communications (GSM) and the General Packet Radio Service (GPRS), and (3) the upcoming third-generation (3G) and fourth generation (4G) networks like EDGE, UMTS and HSDPA, LTE, Wi-Max etc. Some older examples of data-centric networks include, but are not limited to: (1) the Mobitex Radio Network ("Mobitex") and (2) the DataTAC Radio Network ("DataTAC").

To be effective in providing push services for host systems 250, the wireless router 26 may implement a set of defined functions. It can be appreciated that one could select many different hardware configurations for the wireless router 26, however, many of the same or similar set of features would likely be present in the different configurations.

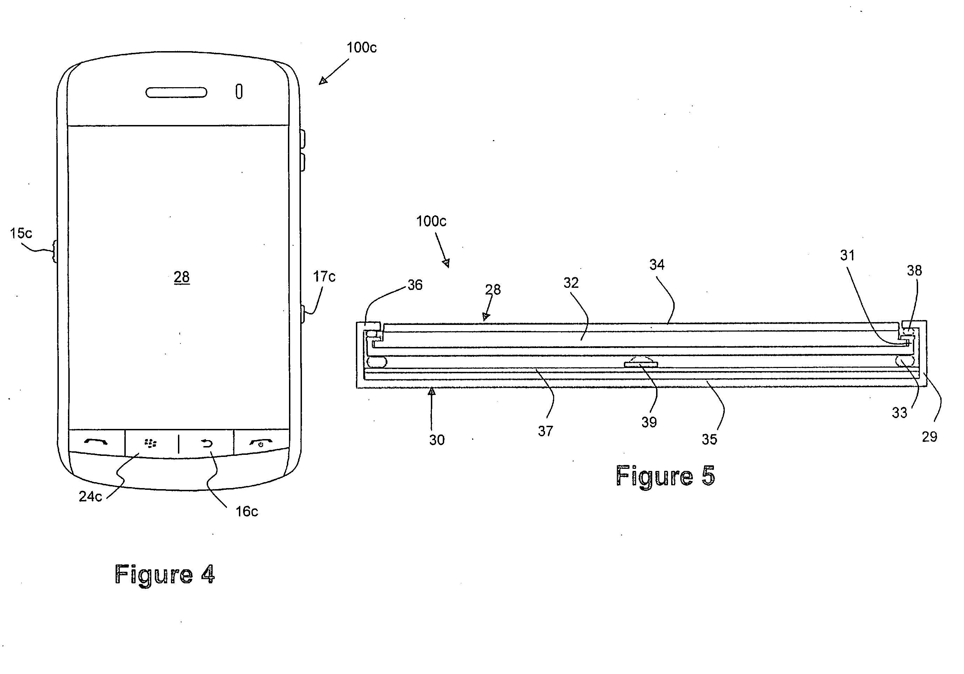

Referring to Figures 2 through 5, one embodiment of a mobile device 1 00a is shown in Figure 2, another embodiment of a mobile device 100b is shown in Figure 3, and another embodiment of a mobile device 100c is shown in Figures 4 and 5. It will be appreciated that the numeral "100" will hereinafter refer to any mobile device 100, including the embodiments 100a, 100b and 100c, those embodiments enumerated above or otherwise. It will also be appreciated that a similar numbering convention may be used for other general features common between Figures 2 through 4 such as a display 12, a positioning device 14, a cancel or escape button 16, a camera button 17, and a menu or option button 24.

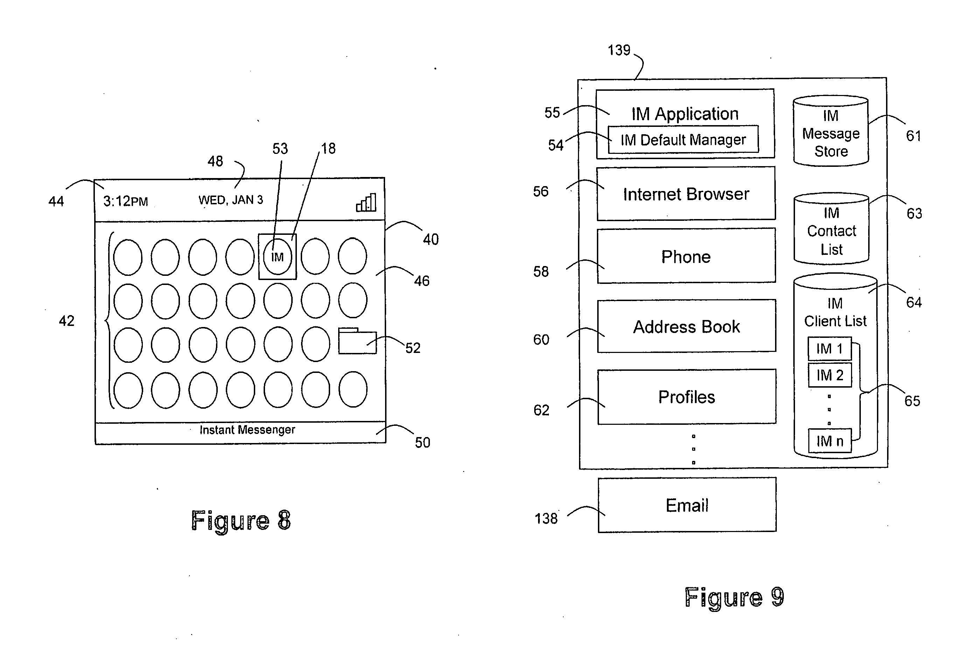

The mobile device 100a shown in Figure 2 comprises a display 12a and the cursor or view positioning device 14 shown in this embodiment is a trackball 14a. Positioning device 14 may serve as another input member and is both rotational to provide selection inputs to the main processor 102 (see Figure 6) and can also be pressed in a direction generally toward housing to provide another selection input to the processor 102. Trackball 14a permits multi-directional positioning of the selection cursor 18 (see Figure 8) such that the selection cursor 18 can be moved in an upward direction, in a downward direction and, if desired and/or permitted, in any diagonal direction. The trackball 14a is in this example situated on the front face of a housing for mobile device 100a as shown in Figure 2 to enable a user to manoeuvre the trackball 14a while holding the mobile device 100a in one hand. The trackball 14a may serve as another input member (in addition to a directional or positioning member) to provide selection inputs to the processor 102 and can preferably be pressed in a direction towards the housing of the mobile device 100b to provide such a selection input.

The display 12 may include a selection cursor 18 that depicts generally where the next input or selection will be received. The selection cursor 18 may comprise a box, alteration of an icon or any combination of features that enable the user to identify the currently chosen icon or item. The mobile device 100a in Figure 2 also comprises a programmable convenience button 15a to activate a selected application such as, for example, a calendar or calculator. Further, mobile device 100a includes an escape or cancel button 16a, a camera button 17a, a menu or option button 24a and a keyboard 20. The camera button 17 is able to activate photo-capturing functions when pressed preferably in the direction towards the housing. The menu or option button 24 loads a menu or list of options on display 12a when pressed. In this example, the escape or cancel button 16a, the menu option button 24a, and keyboard 20 are disposed on the front face of the mobile device housing, while the convenience button 15a and camera button 17a are disposed at the side of the housing. This button placement enables a user to operate these buttons while holding the mobile device 100 in one hand. The keyboard 20 is, in this embodiment, a standard QWERTY keyboard.

The mobile device 100b shown in Figure 3 comprises a display 12b and the positioning device 14 in this embodiment is a trackball 14b. The mobile device 100b also comprises a menu or option button 24b, a cancel or escape button 16b, and a camera button 17b. The mobile device 100b as illustrated in Figure 3, comprises a reduced QWERTY keyboard 22. In this embodiment, the keyboard 22, positioning device 14b, escape button 16b and menu button 24b are disposed on a front face of a mobile device housing. The reduced QWERTY keyboard 22 comprises a plurality of multi-functional keys and corresponding indicia including keys associated with alphabetic characters corresponding to a QWERTY array of letters A to Z and an overlaid numeric phone key arrangement.

Referring to Figures 4 and 5, the mobile device 100c is shown comprising a touch-sensitive display. In Figure 4, the touch sensitive display 28 allows a user to interact with the mobile device 100c. In this embodiment, the mobile device 100c also comprises a menu or option button 24c and a cancel or escape button 16c. In this example, a convenience button 15c and camera button 17c are disposed on the sides of the housing.

As best shown in Figure 5, the housing 30 of the mobile device 100c includes a back 35, a frame 36, which frames the touch-sensitive display 28, sidewalls 29 that extend between and generally perpendicular to the back 35 and the frame 36, and a base 37 that is spaced from and generally parallel to the back 35. The base 37 can be any suitable base and can include, for example, a printed circuit board or flex circuit board. The back 35 includes a plate (not shown) that is releasably attached for insertion and removal of, for example, a battery and a SIM/RUIM card. It will be appreciated that the back 35, the sidewalls 29 and the frame 36 can be injection molded, for example. In the exemplary mobile device 100c shown in Figure 4, the frame 36 is generally rectangular with rounded corners although other shapes are possible.

The display device 32 and the overlay 34 can be supported on a support tray 31 of suitable material such as magnesium for providing mechanical support to the display device 32 and overlay 34. The display device 32 and overlay 34 are biased away from the base 37, toward the frame 36 by biasing elements 33 such as gel pads between the support tray 31 and the base 37. Compliant spacers 38, which can also be in the form of gel pads for example, are located between an upper portion of the support tray 31 and the frame 36. The touch screen display 28 is moveable within the housing 30 as the touch screen display 28 can be moved toward the base 37, thereby compressing the biasing elements 33. The touch screen display 28 can also be pivoted within the housing 30 with one side of the touch screen display 28 moving toward the base 37, thereby compressing the biasing elements 33 on the same side of the touch screen display 28 that moves toward the base 37.

In the present example, the switch 39 is supported on one side of the base 37 which can be printed circuit board while the opposing side provides mechanical support and electrical connection for other components (not shown) of the mobile device 100c. The switch 39 can be located between the base 37 and the support tray 31. The switch 39, which can be a mechanical dome-type switch, for example, can be located in any suitable position such that displacement of the touch screen display 28 resulting from a user pressing the touch screen display 28 with sufficient force to overcome the bias and to overcome the actuation force for the switch 39, depresses and actuates the switch 39. In the present embodiment the switch 39 is in contact with the support tray 31. Thus, depression of the touch screen display 28 by user application of a force thereto, causes actuation of the switch 39, thereby providing the user with a positive tactile quality during user interaction with the user interface of the portable electronic device 20. The switch 39 is not actuated in the rest position shown in Figure 5, absent applied force by the user. It will be appreciated that the switch 39 can be actuated by pressing anywhere on the touch screen display 28 to cause movement of the touch screen display 28 in the form of movement parallel with the base 37 or pivoting of one side of the touch screen display 28 toward the base 37. The switch 39 is connected to a processor and can be used for further input to the processor when actuated. Although a single switch is shown any suitable number of switches can be used and can be located in any suitable position.

The touch screen display 28 can be any suitable touch screen display such as a capacitive touch screen display. A capacitive touch screen display 28 includes the display 32 and the touch-sensitive overlay 34, in the form of a capacitive touch-sensitive overlay 34. It will be appreciated that the capacitive touch-sensitive overlay 34 includes a number of layers in a stack and is fixed to the display 32 via a suitable optically clear adhesive. The layers can include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

In the present example, the X and Y location of a touch are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling with a suitable object such as a finger of a user or a conductive object held in a bare hand of a user resulting in a change in the electric field of each of the touch sensor layers. The signals represent the respective X and Y touch location values. It will be appreciated that other attributes of the user's touch on the touch screen display 28 can be determined. For example, the size and the shape of the touch on the touch screen display 28 can be determined in addition to the location (X and Y values) based on the signals received at the controller 36 from the touch sensor layers.

As will be appreciated, a controller interprets touch events detected on the touch screen display 28, and controls the portable electronic device 20 accordingly. As used herein, a touch event can be, for example, a single touch, a combination of touches, such as a "double touch", a "touch and hold", a "touch and drag", or a touch made with sufficient force to depress the switch 39 described above. The interpretation of a given touch event will depend on the software and implementation details used by the portable electronic device 20. According to an embodiment, an activation touch event, also referred to as a "click" touch event or "clicking", is a touch event where sufficient force is applied to the touch screen 38 to depress or activate the switch 39, and to provide tactile feedback to the user. Such an activation touch event invokes an action as determined by the underlying application and as displayed to the user in a graphical user interface (GUI). As used herein, a user selection is made by such an activation touch event. According to an embodiment, a highlighting touch event, also referred to as a "focus" touch event, is a touch event where the touch screen display 28 is touched lightly without sufficient force to activate the switch 38, and causes the item so touched to be highlighted, or otherwise visibly selected, for further action.

It will be appreciated that for the mobile device 100, a wide range of one or more positioning or cursor/view positioning mechanisms such as a touch pad, a positioning wheel, a joystick button, a mouse, a touchscreen, a set of arrow keys, a tablet, an accelerometer (for sensing orientation and/or movements of the mobile device 100 etc.), or other whether presently known or unknown may be employed. Similarly, any variation of keyboard 20, 22 may be used. It will also be appreciated that the mobile devices 100 shown in Figures 1 through 5 are for illustrative purposes only and various other mobile devices 100 are equally applicable to the following examples. For example, other mobile devices 100 may include the trackball 14b, escape button 16b and menu or option button 24 similar to that shown in Figure 3 only with a full or standard keyboard of any type. Other buttons may also be disposed on the mobile device housing such as colour coded "Answer" and "Ignore" buttons to be used in telephonic communications. In another example, the display 12 may itself be touch sensitive thus itself providing an input mechanism in addition to display capabilities. Furthermore, the housing for the mobile device 100 should not be limited to the single-piece configurations shown in Figures 2 through 5, other configurations such as clamshell or "flip-phone" configurations are also applicable.

To aid the reader in understanding the structure of the mobile device 100 and how it communicates with the wireless network 200, reference will now be made to Figures 6 through 9.

Referring first to Figure 6, shown therein is a block diagram of an exemplary embodiment of a mobile device 100. The mobile device 100 comprises a number of components such as a main processor 102 that controls the overall operation of the mobile device 100. Communication functions, including data and voice communications, are performed through a communication subsystem 104. The communication subsystem 104 receives messages from and sends messages to a wireless network 200. In this exemplary embodiment of the mobile device 100, the communication subsystem 104 is configured in accordance with the Global System for Mobile Communication (GSM) and General Packet Radio Services (GPRS) standards, which is used worldwide. Other communication configurations that are equally applicable are the 3G and 4G networks such as EDGE, UMTS and HSDPA, LTE, Wi-Max etc. New standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, a GPS receiver 121, short-range communications 122, and other device subsystems 124.

Some of the subsystems of the mobile device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 may use a subscriber module component or "smart card" 126, such as a Subscriber Identity Module (SIM), a Removable User Identity Module (RUIM) and a Universal Subscriber Identity Module (USIM). In the example shown, a SIM/RUIM/USIM 126 is to be inserted into a SIM/RUIM/USIM interface 128 in order to communicate with a network. Without the component 126, the mobile device 100 is not fully operational for communication with the wireless network 200. Once the SIM/RUIM/USIM 126 is inserted into the SIM/RUIM/USIM interface 128, it is coupled to the main processor 102.

The mobile device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 100. Although current technology makes use of a battery, future technologies such as micro fuel cells may provide the power to the mobile device 100.

The mobile device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, may be installed on the mobile device 100 during its manufacture. Software applications may include a message application 138, a device state module 140, a Personal Information Manager (PIM) 142, a connect module 144 and an IT policy module 146. A message application 138 can be any suitable software program that allows a user of the mobile device 100 to send and receive electronic messages, wherein messages are typically stored in the flash memory 108 of the mobile device 100. A device state module 140 provides persistence, i.e. the device state module 140 ensures that important device data is stored in persistent memory, such as the flash memory 108, so that the data is not lost when the mobile device 100 is turned off or loses power. A PIM 142 includes functionality for organizing and managing data items of interest to the user, such as, but not limited to, e-mail, text messages, instant messages, contacts, calendar events, and voice mails, and may interact with the wireless network 200. A connect module 144 implements the communication protocols that are required for the mobile device 100 to communicate with the wireless infrastructure and any host system 250, such as an enterprise system, that the mobile device 100 is authorized to interface with. An IT policy module 146 receives IT policy data that encodes the IT policy, and may be responsible for organizing and securing rules such as the "Set Maximum Password Attempts" IT policy.

Other types of software applications or components 139 can also be installed on the mobile device 100. These software applications 139 can be pre-installed applications (i.e. other than message application 138) or third party applications, which are added after the manufacture of the mobile device 100. Examples of third party applications include games, calculators, utilities, etc.

The additional applications 139 can be loaded onto the mobile device 100 through at least one of the wireless network 200, the auxiliary I/O subsystem 112, the data port 114, the short-range communications subsystem 122, or any other suitable device subsystem 124.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

For voice communications, received signals are output to the speaker 118, and signals for transmission are generated by the microphone 120. Although voice or audio signal output is accomplished primarily through the speaker 118, the display 110 can also be used to provide additional information such as the identity of a calling party, duration of a voice call, or other voice call related information.

For composing data items, such as e-mail messages, for example, a user or subscriber could use a the touch-sensitive overlay 34 on the display 32 that are part of the touch screen display 28, in addition to possibly the auxiliary I/O subsystem 122. The auxiliary I/O subsystem 112 may include devices such as: a mouse, track ball, infrared fingerprint detector, or a roller wheel with dynamic button pressing capability. A composed item may be transmitted over the wireless network 200 through the communication subsystem 104.

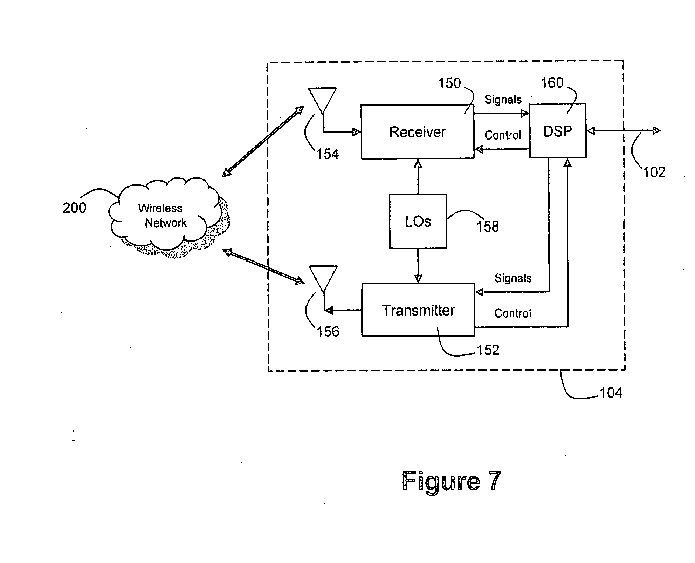

Referring now to Figure 7, an exemplary block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile device 100 is intended to operate. Thus, it should be understood that the design illustrated in Figure 5 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the mobile device 100 and the wireless network 200 can contain one or more different channels, typically different RF channels, and associated protocols used between the mobile device 100 and the wireless network 200. An RF channel is a limited resource that must be conserved, typically due to limits in overall bandwidth and limited battery power of the mobile device 100.

When the mobile device 100 is fully operational, the transmitter 152 is typically keyed or turned on only when it is transmitting to the wireless network 200 and is otherwise turned off to conserve resources. Similarly, the receiver 150 may be periodically turned off to conserve power until it is needed to receive signals or information (if at all) during designated time periods.

Turning now to Figure 8, the mobile device 100 may display a home screen 40, which may be the active screen when the mobile device 100 is powered up or may be accessible from other screens. The home screen 40 generally comprises a status region 44 and a theme background 46, which provides a graphical background for the display 12. The theme background 46 displays a series of icons 42 in a predefined arrangement on a graphical background. In some themes, the home screen 40 may limit the number icons 42 shown on the home screen 40 so as to not detract from the theme background 46, particularly where the background 46 is chosen for aesthetic reasons. The theme background 46 shown in Figure 8 provides a grid of icons. It will be appreciated that preferably several themes are available for the user to select and that any applicable arrangement may be used. One or more of the series of icons 42 is typically a folder 52 that itself is capable of organizing any number of applications therewithin.

The status region 44 in this embodiment comprises a date/time display 48. The theme background 46, in addition to a graphical background and the series of icons 42, also comprises a status bar 50. The status bar 50 provides information to the user based on the location of the selection cursor 18, e.g. by displaying a name for the icon 53 that is currently highlighted.

An application, such as an instant messaging default manager or IM application 55 (see also Figure 9), may be initiated (opened or viewed) from display 12 by highlighting a corresponding icon 53 using the positioning device 14 and providing a suitable user input to the mobile device 100. For example, instant messaging application 55 may be initiated by moving the positioning device 14 such that the icon 53 is highlighted by the selection box 18 as shown in Figure 8, and providing a selection input, e.g. by pressing the trackball 14b. Alternatively, in a mobile device 100c such as in Figures 4 and 5, an application may be initiated (opened or viewed) from a touch screen display 28 by executing a "click" touch event or "clicking" the touch screen display 28 at the X and Y position of the corresponding icon 53.

Figure 9 shows an example of the other software applications and components 139 that may be stored on and used with the mobile device 100. Only examples are shown in Figure 9 and such examples are not to be considered exhaustive. In this example, an IM application 55, an IM default manager 54 (incorporated with the IM application 55), internet browser 56, phone application 58, address book 60 and a profiles application 62 are shown to illustrate the various features that may be provided by the mobile device 100. Also shown in Figure 9 is the message application 138, which in the following will be referred to as an email application 138 for clarity. It will be appreciated that the various applications may operate independently or may utilize features of other applications. For example, the phone application 58 and email application 138 may use the address book 60 for contact details. The IM application 55 may be implemented as a PIN-to-PIN system (where PIN refers to a personal identification number) or may be a locally installed application configured to be used with a 3^{rd} party system, details of which are described below and shown in Figure 8. As such, it can be seen that the mobile device 100 may facilitate the use of multiple instant messaging clients operated by respective systems.

It can also be seen that the IM default manager 54 is, in this embodiment, a subset of the IM application 55 but may also be a separate component.

The IM application 55, and by association the IM default manager 54, comprises or otherwise has access to an instant messaging (IM) message store 61, which is used to store instant messages and instant messaging sessions or conversations, for the instant messaging application 55, each comprising one or more messages exchanged with a particular correspondent or buddy. The IM default manager 54 also comprises or otherwise has access to an IM contact list 63, which may or may not be a subset of the contacts in the address book 60. The IM contact list 63 comprises the buddies with which the user of the mobile device 100 can engage in an instant messaging conversation, using the system associated with the IM default manager 54. The IM default manager 54 also has access to a number of different IM clients 65, instructions and protocols for which are stored in an IM clients list 64, wherein a contact in the IM contact list 63 may be associated with one or more IM clients 65.

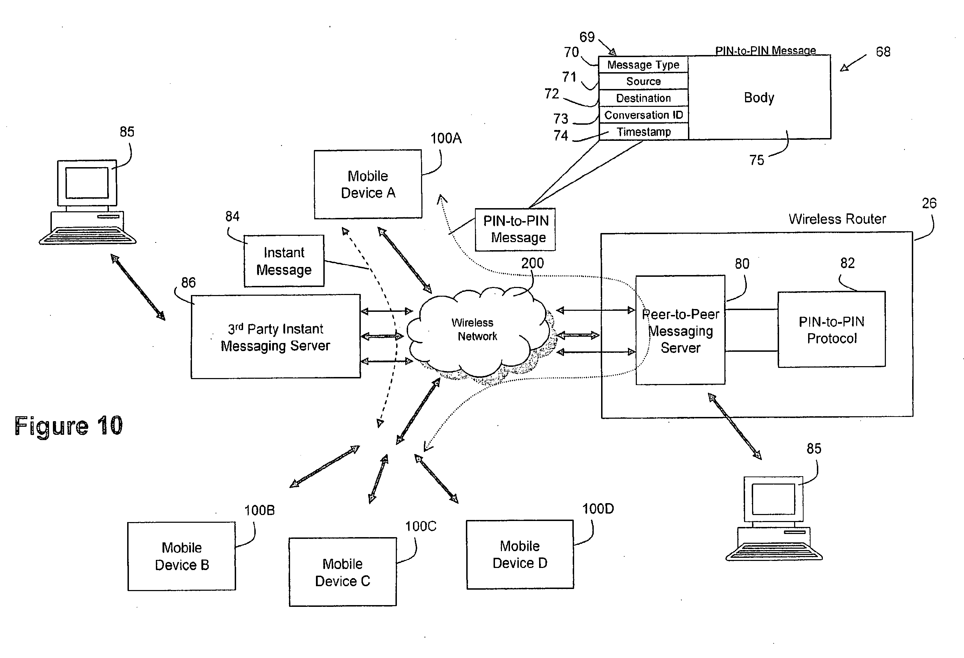

Turning now to Figure 10, a configuration suitable for a user of mobile device A, hereafter referred to as mobile device 100A, to conduct instant messaging with buddies included in their IM contact list 63 is shown. It can be seen in Figure 10 that two examples of instant messaging systems are shown. A PIN-based messaging system is shown that utilizes the wireless router 26 and a 3^{rd} party instant messaging service is also shown that utilizes a 3^{rd} party instant messaging server 86 accessed by mobile device 100A through the network 200. As can be seen, the 3^{rd} party instant messaging server 86 may also communicate with desktop users 85 thus facilitating instant messaging between desktop users 85 and between a mobile device user 100 and a desktop user 85. Similarly, the PIN-based messaging system may also facilitate communications with desktop users 85.

In the embodiment illustrated in Figure 10, the PIN-based messaging system is implemented using a server-based communication infrastructure, such as one that provides email, SMS, voice, Internet and other communications. Particularly suitable for hosting a peer-to-peer messaging server 80, is the wireless router 26 used in systems such as those shown in Figure 1. In Figure 10, the wireless router 26 facilitates communications such as instant messaging between mobile device 100A and mobile devices for User B, User C and User D, denoted by 100B, 100C and 100D respectively. In other words, one communication device can exchange messages with another communication device. It will be appreciated that the number of users participating in the example shown in Figure 10 is for illustrative purposes only. Instant messaging is provided by the instant messaging program 54 stored on each mobile device 100A- 100D which is initiated from the home screen 40 by highlighting and selecting the instant messaging icon 53 as illustrated in Figure 8. The wireless router 26 routes messages between the mobile devices 100A-100D according to a PIN-to-PIN protocol 82.

A PIN-to-PIN based instant message is generally denoted by numeral 68 in Figure 10. In this embodiment, the message 68 is a PIN-based message. In a PIN-based messaging protocol 82, each message 68 has associated therewith a PIN corresponding to the mobile device 100 which has sent the message 68 (source) and includes a destination PIN identifying the intended recipient (destination). Further detail of an example structure for the messages 68 is also shown in Figure 10. Each message 68 generally comprises a body 75, which contains the content for the message 68 (e.g. text), and a header 69, which contains various fields used for transmitting and processing each message 68. In this example, the header 69 includes a message type field 70 to specify the type of transmission (e.g. PIN, SMS etc.), a source field 71 to specify the device address for the sender, a destination field 72 to specify the device address for the intended recipient, a conversation ID field 73 to identify which conversation thread the message 68 corresponds to (e.g. such that each message 68 is identified by the conversation in which it was sent), and a timestamp field 74 to indicate the time (and if desired, the date) at which the message 68 was sent by the designated sender.

It will be appreciated that other information or attributes may be included in the message 68, such as a subject field (not shown) to enable a subject for part or all of the conversation to be transported with the message 68 (e.g. to create new subjects, modify subjects, notify others of subjects, etc.). Although not shown in Figure 10, one or more tags can also be used to indicate to the instant messaging application 55, upon receipt of a message 68, that the message 68 has certain attributes such as a subject that is to be displayed, whether additional information is being transported (i.e. data or information in addition to the message content), or whether the message 68 is being used for some other purpose such as provisioning, synchronization, etc.

In general, in a PIN based messaging protocol 82, the sender of the message 68 knows the PIN of the intended recipient. This is preferably established when the two devices request to add each other to their respective contact or buddy lists. At the time of requesting new contacts, in traditional PIN-to-PIN protocols 82, the two respective PIN numbers may be exchanged via request e-mails which are configured to be intercepted by the respective instant messaging applications 55 so as to not appear in the message list or "inbox" of the user. In other embodiments, to avoid the exchange of email messages to add a buddy to the IM contact list 63, a global address list (GAL) application (at the host system 250 - e.g. see Figure 1) may instead be accessed in order to obtain the PIN for the intended recipient directly. Alternatively, the user may simply ask for the PIN from another user and enter it manually.

It can be seen in the example shown in Figure 10 that mobile device 100A can communicate directly with any of the mobile devices 100B-100D through the peer-to-peer messaging server 80 as indicated by the short-dashed line. Instant messaging can also be accomplished through the 3^{rd} party IM server 86 by sending 3^{rd} party based instant messages 84 over the wireless network 200 as indicated by the long-dashed line.

When conducting a PIN-to-PIN instant messaging session according to the embodiment shown in Figure 10, the mobile devices 100A-100D can communicate directly with the wireless router 26 in a client based exchange where, similar to other peer-to-peer programs, an intermediate server is not required. A message 68 sent by one mobile device 100 is received by the wireless router 26, which obtains the PIN number for the intended recipient from information associated with the message 324 (e.g. a data log) or from the message 324 itself. Upon obtaining the recipient's PIN according to the PIN-to-PIN protocol 82, the wireless router 26 then routes the message 68 to the recipient associated with the mobile device 100 having such a PIN. The wireless router 26 typically also provides a delivery confirmation to the original sender, which may or may not be displayed to the user. The destination device can also provide such delivery information. The wireless router 26 should be capable of routing messages 68 reliably and hold onto the messages 68 until they are successfully delivered. Alternatively, if delivery cannot be made after a certain timeout period, the wireless router 26 may provide a response indicating a failed delivery. The wireless router 26 may choose to expire a message 68 if a certain waiting period lapses.

It will also be appreciated that, as noted above, instant messaging can be implemented using any other suitable protocol such as SMS. In SMS, a message is transmitted to an SMC center (SMSC) within a carrier's infrastructure, and then delivered to the mobile phone number of the destination device. The SMSC would also be configured to hold onto messages and deliver then once the destination device is within coverage.

When conducting an instant messaging session using a 3^{rd} party instant messaging application, access to the 3^{rd} party instant messaging server 86 is first established and instant messages 84 exchanged over the wireless network 200 according to the appropriate protocol used by the 3^{rd} party. It will be appreciated that the principles discussed below are equally applicable to both PIN-to-PIN messaging and other Internet service-based instant messaging systems hosted by such 3^{rd} parties.

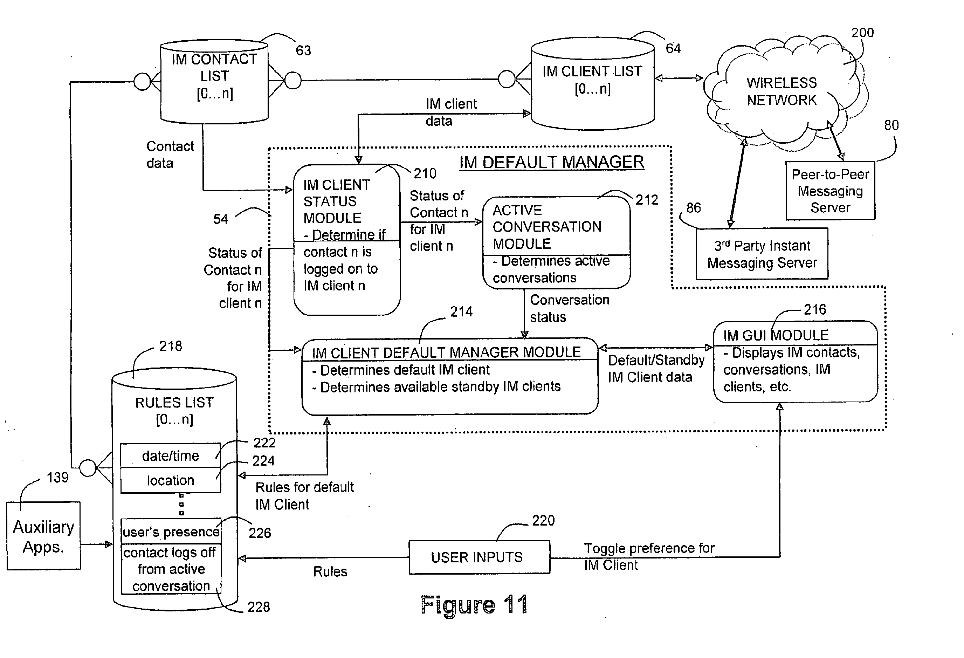

Turning to Figure 11, a mobile device 100 is provided with the capability of communicating (e.g. exchanging messages) with one or more other communication devices (e.g. mobile devices) via a plurality of messaging clients, including a number of IM clients. In this example, the mobile device 100 comprises an IM default manager 54 for managing and monitoring connectivity information associated with the IM clients 65. It will be appreciated that the IM default manager 54 may also be responsible for managing selection of connectivity with other, non-IM messaging clients, e.g. those which do not rely on presence, such as SMS. For the purposes of the following explanation, the IM default manager 54 may, in addition to monitoring connectivity information pertaining to the IM clients 65, can also effect navigation between the IM clients 65 and other messaging clients, e.g. according to user input. As such, the IM default manager 54 may also communicate with other messaging clients.

The IM default manager 54 interacts with the IM contact list 63, IM client list 64 and an IM GUI module 216. The IM default manager 54 also interacts with a rules list 218, which comprises a set of one or more rules that may be used to determine how the default mode of communication is managed. The rules list 218, IM contact list 63 and IM client list 64 have a many-to-many relationship. For example, an IM client 65 in the IM client list 64 may contain a list of several contacts in the contact list 63. Similarly, a contact may use several IM clients 65, thus allowing the user to interact with the same contact across several different IM clients 65. A rule in the rules list 218 may also be applicable to multiple contacts in the contact list 63, and a contact may be governed by multiple rules. Although not shown in Figure 11, there may also be a many-to-many relationship between the rules list 218 and IM client list 64. It can be appreciated that each IM client 65 in the IM client list 64 is connected to the wireless network 200 in order to exchange messages with the peer-to-peer messaging server 80 and the 3^{rd} party instant messaging server 86.

The IM default manager 54 comprises a series of modules, which may exchange data with the rules list 218, IM contact list 63, IM client list 64 and IM GUI module 216 where applicable. The modules in the IM default manager 54 allow for a user to manually or automatically toggle between IM clients for a contact to set a default and/or standby communication mode, and any configurations to that end are applicable to the principles herein described.

In the embodiment shown in Figure 11, the IM default manager 54 comprises an IM client status module 210 for determining the presence status of a particular contact or particular IM client; an active conversation module 212 for determining active conversations between the user and contacts; an IM client default manager module 214 for determining and setting the default IM protocol as well as the standby IM protocol; and, an IM graphical user interface (GUI) module 216 which displays the IM contacts, IM conversations, IM clients and other IM related information.

The IM client status module 210 obtains status information about the contacts from the IM contact list 63 and obtains status information about the IM clients from the IM client list 64. With this status information, the IM client status module 210 is able to monitor and determine whether each contact is logged on or connected to a certain IM client 65 and their status on the IM client. For example, User A's IM contact list 63 may include a contact User B, wherein User B may be able to interact with User A using the IM clients for Yahoo!™ Messenger third party IM server 86 and the pin-to-pin messaging server 80. In this example, the IM client status module 210 monitors the status information pertaining to the IM clients and determines that User B is logged on to the pin-to-pin messaging server 80 and is available, but is not logged on to Yahoo!™ Messenger third party IM server 86.

In another embodiment, a third-party may be monitoring the connectivity information pertaining the messaging clients and may be sending updates or indications to the IM client status module 210 regarding connectivity information. For example, the third party instant messaging server 86 may be monitoring the connectivity information and send corresponding updates or indications to the mobile device 100, wherein the IM client status module 210 uses the updates or indications to detect a loss of connection with User B by a certain messaging client.

The IM client status module 210 provides the IM status of each contact for each corresponding IM client to the active conversation module 212 and to the IM client default manager module. For the contacts that are logged on, the active conversation module 212 monitors the active IM conversations between the mobile user and the contacts. During a conversation, if a contact logs off as determined by the IM client status module 210, the active conversation module 212 sends a notification about the change in conversation status to the IM client default manager module 214. It can be appreciated that the user's status information pertaining to the messaging clients is also monitored. In other words, upon detecting that the user or contact associated with a current messaging conversation is no longer connected to the current messaging client pertaining to the status information, then a notification is provided to the user. The conversation status notification is used by the IM client default manager module 214 to initiate toggling to a standby IM client, as discussed in more detail below.

The IM client default manger module 214 receives information from various sources to determine the default IM client and any standby IM clients. In order to correlate a particular contact with a particular IM client 65, the IM default manager module 54 relies on the information from the IM client status module 210. The correlation may be used to assemble a unified contact list, where a single contact entry may have associated therewith, multiple messaging clients including multiple IM clients 65. In order to toggle seamlessly between one IM client 65 or messaging client and another IM client 65 for the same contact during an exchange of messages, the IM client default manager 214 may use the conversation status information provided by the active conversation module 212. For example, when a user is engaged in an IM conversation with a contact, and the contact suddenly logs off, then the IM client default manager module 214 can be notified by the active conversation module 212. In this example, the notification triggers the IM client default manager module 214 to display the available standby IM clients, allowing the user to select their preferred standby messaging or IM client 65 and thus, to continue exchanging messages with that contact.

The IM client default manager module 214 also obtains various user inputs 220 through the IM GUI module 216, to select between IM clients 65. The user may use various keystrokes, trackball movements, touch screen actions, etc. to interact with the IM GUI module 216 and thus, the IM client default manager 214. The user inputs 220 may also be used to specify or select a number of rules as stored in the rules list 218. The user may provide or activate rules that determine how the default IM client settings and standby IM protocol settings are managed. To activate or enforce the rules appropriately, the IM client default manager module 214 and the rules list 218 are in communication with one another.

The rules may be based on a variety of conditions and add to the intelligence of managing the default and standby IM client settings. The rules shown in Figure 11 are non-exhaustive examples. In one rule, the default IM clients may be selected based on the date and time 222. For example, during daytime business hours the default settings for all contacts is to use one particular IM client 65, while during the evenings the default IM client for each contact may vary on user preference. Similarly, a location-based rule 224 may determine the default mode of communication. For example, when the user is in the local vicinity of the office, the default IM client may be one that is more likely to be used by co-workers, whereas when the user is outside the office vicinity, the default IM client for the group of contacts may be another IM client 65. Another rule may be based on the strength of a wireless signal. For example, a wireless signal in mediums such as mobile networks, Wi-Fi, or Bluetooth, may vary. Accordingly, a particular IM client may be better suited for different wireless signals of different signal strengths. Other rules may be based on least-cost-available routing wherein different messaging clients may have different associated data, time or monetary costs, which may be a factor in selecting a default or standby messaging client. It can be appreciated that the rules may be configured to suit a user's preference. Upon detecting an external event comprising such rules, the active messaging client may be switched to another messaging client.

Rules may also be used for determining the standby settings. For example, in a conversation-based rule 228, when a contact logs off from an active conversation with the user, a screen may display the available standby IM clients for which the user can toggle towards. In this example, the conversation status notification that is generated by the active conversation module 212 is transferred to the IM client default manager module 214 and triggers the conversation-based rule 228. In yet another rule, a presence-based rule 226 may determine the standby and default IM clients. For example, if the user's status or presence is switched from "available" to "busy", then the default IM client may become SMS. Further, all active conversations may switch over to SMS as well.

The rules list 218 may also interact with auxiliary software applications 139 to trigger responses. For example the location-based rule 224 may interact with a GPS application. It may be appreciated that various other rules may apply and that more than one rule may apply at any given time.

The IM client default manager module 214 can process various types of information, such as from the rules list 218 and user inputs 220, to determine the default IM client and available IM protocols. The unified contact list and the IM and other messaging clients corresponding to each contact can be displayed using the IM GUI module 216. Visual prompts, messages, toggling options and interactive features are also displayed using the IM GUI module 216. The user interacts with the IM GUI module 216 to select, for example, a default IM client for a particular client or group of clients. The interaction between the user and the IM GUI module 216 and, by correlation, the IM default manager 54 is discussed below.

It can be understood that various configurations of the IM application 55 that achieve the principles of the embodiment set out in Figure 11 are also applicable.

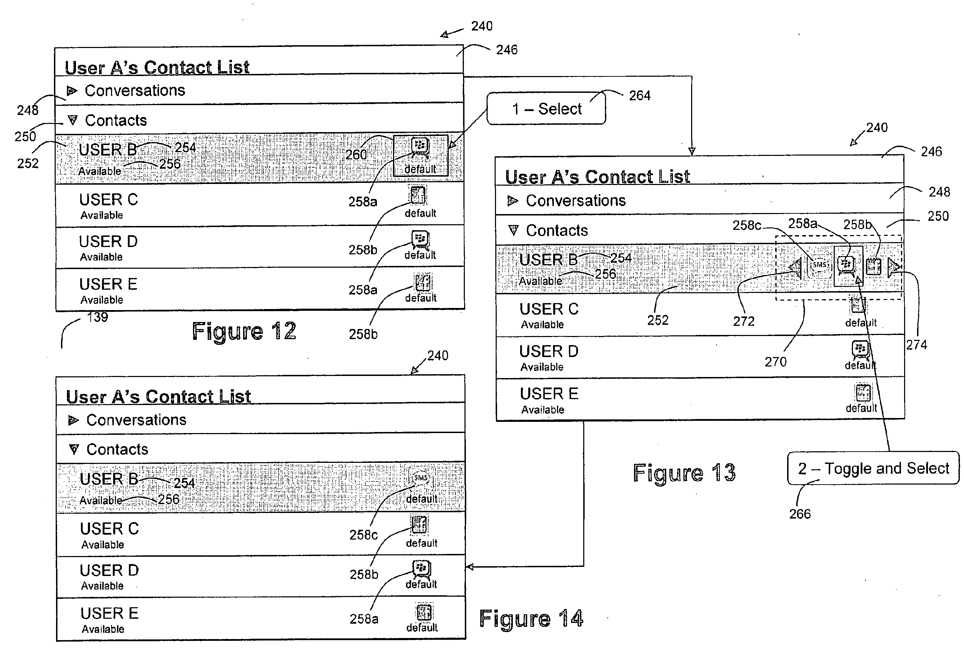

Turning now to Figure 12, an example GUI is displayed for a unified messaging contact list 240. In this example, the contact list 240 is associated with User A, as displayed in the header bar 246. Below the header bar 246 is a conversations bar 248 from which a dropdown list of active conversations may be displayed. In the example shown, the conversations list has been collapsed. It may be noted that by "clicking" or selecting the conversations bar 248, the list of conversations may be expanded to show the conversations, or collapsed to hide conversations. Below the collapsed conversations bar 248 is the contacts bar 250 which, in this example, is in an expanded mode. Similar to the conversations bar 248, the contacts bar 250 may be expanded and collapsed through "clicking" or other selection mechanism. In the expanded mode, the list of contacts are arranged in a vertical stack. In Figure 12, User A's GUI displays four contacts, namely User B, User C, User D and User E. Each contact is represented by a contact listing 252 which displays the contact's name 254, the default messaging client 258 and the status or presence 256 for the corresponding displayed default messaging client. In the GUI provided in Figure 12, the contact name 254 and status 256 are displayed to the left-hand side of the contact listing 252, while the default messaging client icon 258 is displayed to the right-hand side.

Specific types of a default messaging client icons, or default messaging icons 258 are referenced by the suffixes 'a', 'b' and 'c'. For example, the pin-to-pin messaging client may be designated 258a, Facebook™ Chat may be designated 258b and SMS may be designated 258c.

In an example scenario with reference to Figures 12, 13 and 14, User A switches the active designation between messaging clients. More particularly, the default messaging client icon 258 is switched from the pin-to-pin messaging client icon 258a to SMS icon 258c for User B. According to the GUI in Figure 12, User A highlights User B's contact listing 252 either by using a trackball 14a, 14b, or trackwheel to scroll the cursor over User B's contact listing 252, or by touching the contact bar 252 in a mobile device 100c with a touch sensitive display 28. When User B's contact listing 252 is highlighted, User A may scroll the cursor to the right-hand side towards the default messaging icon 258a, which then causes the area surrounding the default icon to be highlighted; this area may be referred to as the messaging client panel 260. Clicking a trackball 14a, 14b or trackwheel while the cursor is highlighting the messaging client panel 260 will activate the toggle list 270 shown in Figure 13. In the case of a touch screen mobile device 100c, User A may directly touch and click the messaging client panel 260 to activate the toggle list 270. This activation of the messaging client panel 260 is indicated by the User A's selection action 264.

It may be noted that upon User A highlighting User B's contact listing 252 but without highlighting the messaging client panel 260, User A may click on the contact listing 252 to activate a conversation screen.

Turning to Figure 13, the contact list 240 is shown after detecting the first input by User A and thereby displaying the toggle list 270 for enabling selection of a messaging client from a list of available messaging clients. The toggle list 270 allows User A to scroll through a number of messaging clients available to both User A and User B. In the embodiment shown in Figure 13, three default messaging icons (i.e. 258a, 258b and 258c) are displayed at a time in the toggle list 270, with the toggle cursor 262 highlighting the center or middle icon. A right pointing arrow 274 and left pointing arrow 272 towards the periphery of the toggle list 270 indicate that the row of default messaging icons 258 may be shifted towards the left or right to display additional default messaging icons 258, which are currently not displayed in the toggle list 270. For example, in Figure 13, User A may scroll the toggle list 270 to the right, causing the right-most default messaging icon 258b to disappear, and subsequently moving default messaging icon 258a to the right-most position and moving default messaging icon 258c to the middle or center position. Another default messaging icon 258 (not shown), appears in the previous position held by default messaging icon 258c, that is the left-most position. The toggle cursor 262 remains in the center position and now highlights default messaging icon 258c. Upon detecting User A's second input for selecting a messaging client, the selected messaging client is designated as the active, or in this case, default messaging client. More particularly, when User A selects the default messaging icon 258c, (i.e. for SMS in this example), the IM default manager 54 will set the SMS mode as the current default messaging client for User B.

The toggling or scrolling action 266 of the default messaging icons 258 can be carried out by either rolling a trackball 14a, 14b or a trackwheel. When using a touch display 28, User A can touch and drag the panels of default messaging icons 258 towards either end of the toggle list 270. Alternatively, when using a touch display 28, User A can touch or tap the right or left arrows 274, 272 to toggle the default messaging icons 258 to the right or left, respectively. The selection of the desired default client is made by clicking the trackball 14a, 14b, trackwheel or touch screen display 28.

It can be appreciated that various arrangements for the GUI may also apply. For example, the number of displayed icons in the toggle list 270 may vary, the arrows 272, 274 are not necessary to show the direction of toggling, and the available default messaging clients may be toggled or scrolled in a vertical manner rather than in a horizontal manner as described above.

Turning now Figure 14, after the selection of the default messaging client is made, the toggle list 270 disappears and the selected default messaging icon 258c for SMS appears in the right-hand side of User B's contact listing 252. Therefore, when User A next selects User B's contact listing 252, a conversation window appears for exchanging messages via SMS.

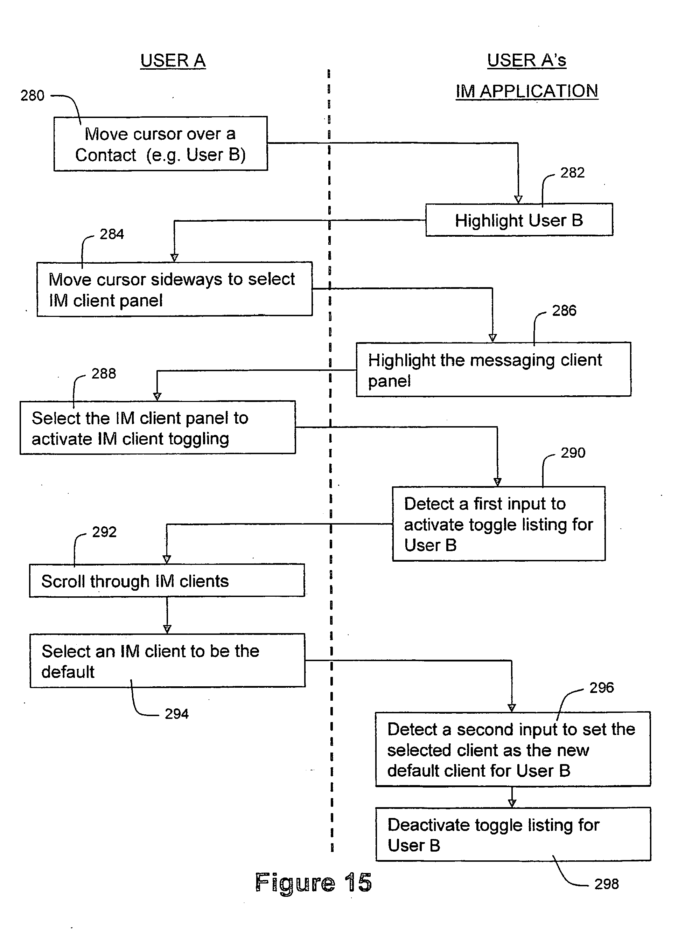

Turning to Figure 15, a flowchart illustrating various inputs and computer executable instructions for toggle a default messaging client is shown. First, at step 280, User A moves the cursor over a contact, for example User B, to highlight the contact. In response, the IM application 55 highlights the contact listing 252, as per step 282. At step 284, User A then moves the cursor towards the side to highlight the messaging client panel 260 at step 286. User A then provides a first input to select the messaging client panel 260 at step 288. Upon detecting the first input, the IM application 55 activates the toggle list 270 at step 290. At step 292, User A scrolls through the default messaging icons 258 to browse the available options before, at step 294, providing a second input to select a desired default messaging client. Upon detecting the second input, the IM application 55 selects the default messaging client for User B (step 296) and thereafter, deactivates the toggle list 270.

It is appreciated that the user input mechanisms may differ between mobile devices 100. For example, in the context of a touch display mobile device 100c, User A may start at step 288 by touching and clicking the toggle list 270 for User B to activate the expanded view of the toggle list 270.

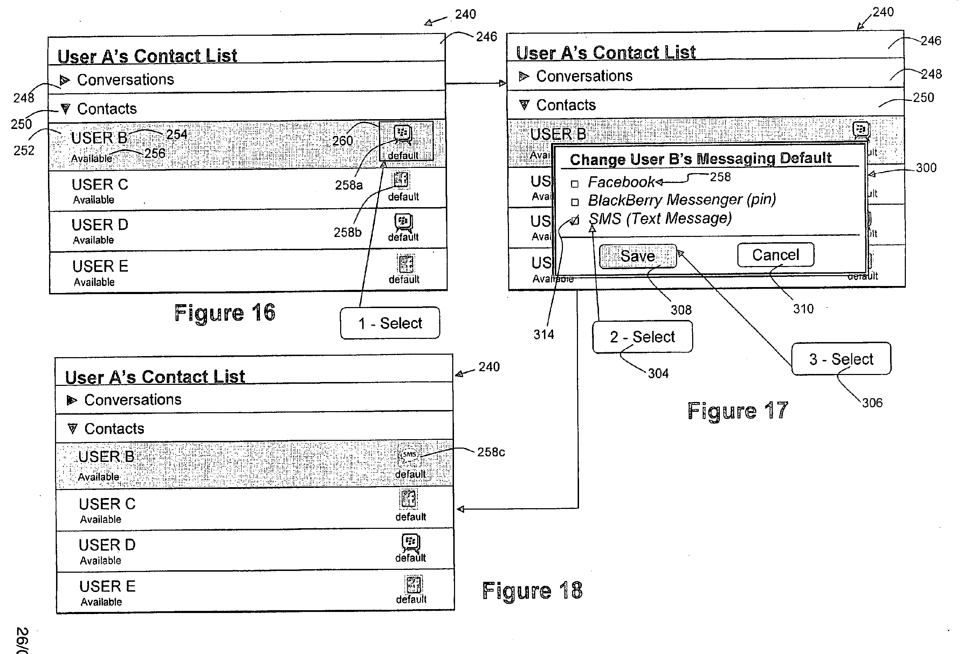

Turning now to Figures 16 through 18, another example embodiment for managing IM defaults is shown. In Figure 16, a unified contact list 240 is displayed having similar elements as Figure 12. Similar to the above process depicted in Figure 12, in Figure 16, User A highlights a contact by moving the cursor to a desired contact listing 252, in this case User B. After highlighting the contact listing 252, User A moves the cursor to the side to highlight the messaging client panel 260.

Moving next to Figure 17, upon selecting the messaging client panel 260, the IM default manager 54 provides a selection box 300 for enabling selection of one messaging client from a list of available messaging clients. In the example, the selection box 300 may have the heading "Change User B's Messaging Default" since User A selected the contact User B. Below the heading, a list of default messaging clients common to both User A and User B is displayed. An IM client 65 that is common to the user and the contact indicates that both the user and the contact have an account with that particular IM service or platform, and in some cases may have each other on their respective contact lists for that IM client 65; such IM clients 65 are also referred to herein as "available" IM clients 65. A default messaging client icon 258 may comprise text, as shown in Figure 17, or graphics, or both. Beside each default messaging client icon 258 is a checkbox 314 to indicate which default messaging client has been selected. In this example, User A selects the SMS mode for the default messaging client, as marked in action 304, and the selects the "Save" button 308 in action 306. Selecting the "Save" button 308 means the currently selected default messaging client as marked in the selection box 300 becomes the new default messaging client. After selecting the "Save" button 308 the selection box 300 is closed or otherwise no longer displayed. Selecting the "Cancel" button 310 causes the selection box 300 to close or otherwise to no longer be displayed, and the previously selected default messaging client remains as the current messaging client.

Continuing with the example in Figure 18, after User A selects and saves the SMS mode as the new default messaging client, the IM GUI module 216 displays the SMS default messaging icon 258c in the contact listing 252 for User B.

It can be appreciated that the positioning of the cursor for selection may be executed by using a trackball 14a, 14b, or trackwheel. Alternatively, in touch display mobile devices 100c the cursor may be moved by dragging a finger across the touch display 28 and selections may be made by clicking the touch display 28.

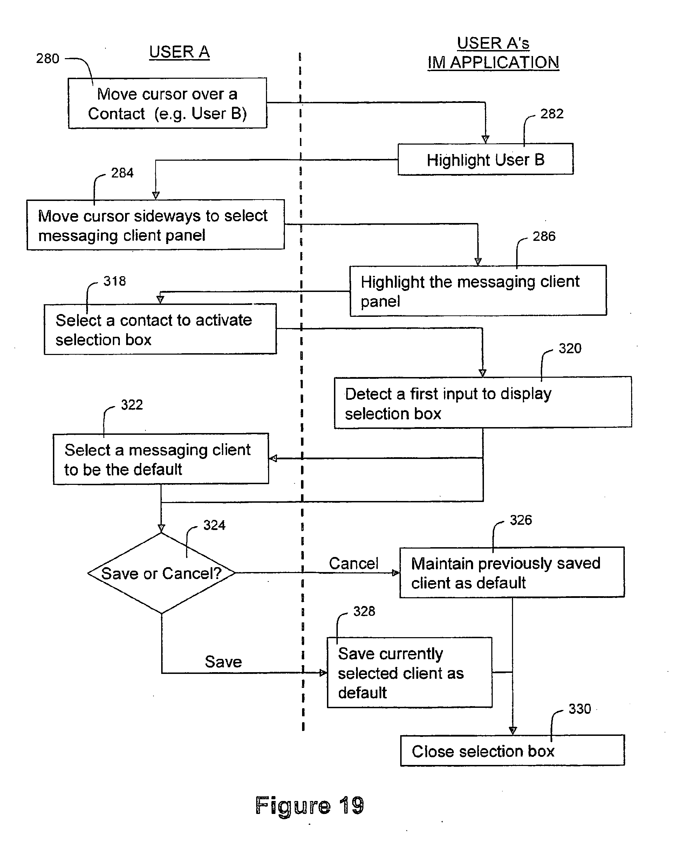

The operation illustrated in Figures 16 to 18 are also shown in Figure 19. Steps 280, 282, 284 and 286 correspond to the steps in Figure 15, whereby User A highlights a contact before highlighting the messaging client panel 260. At step 318, the User A selects the messaging client panel 260 to trigger, at step 320, the display of a selection box 300 comprising a list of available messaging clients. At this stage, User A may decide to select a default messaging client (step 322) and then decide to save or cancel (step 324), or directly decide to save or cancel (step 324). If User A decides to select the cancel option, at step 326 the IM application 55 will revert to the previously saved default messaging client before closing the selection box 300 (step 330). If User A decides to select the save option, at step 328 the IM application 55 will save the default messaging client that is currently selected in the selection box 300 and then close the selection box 300.

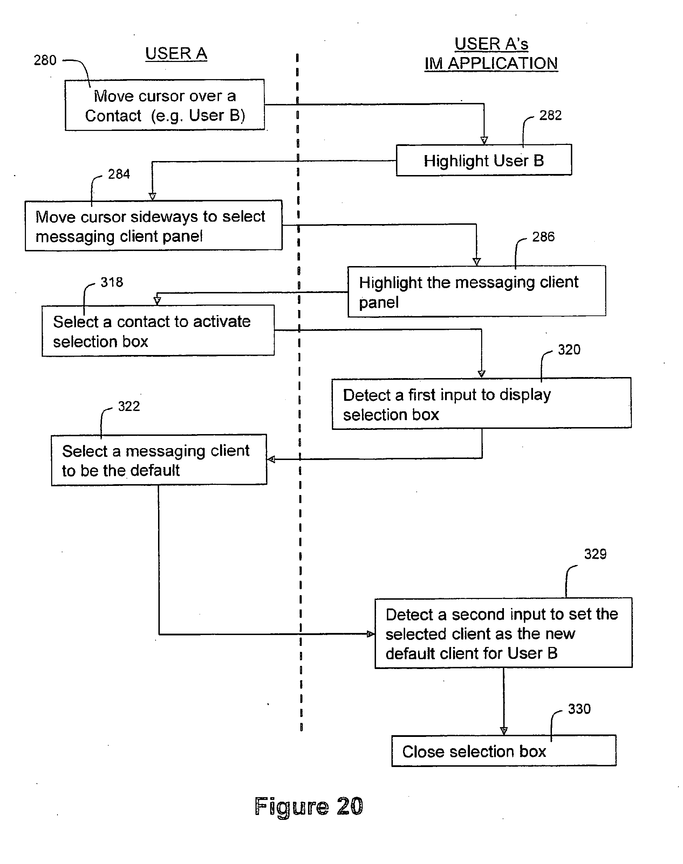

Figure 20 shows an alternate embodiment of the method shown in Figure 19, wherein an altered selection box (not shown) would operate without the use of "Save" or "Cancel" buttons. Upon the default IM manager 54 detecting a first input to display the altered selection box (step 320), the selection of a desired messaging client 65 (step 322) is detected as a second input to designate the desired messaging client 65 as the new default messaging client (step 329).

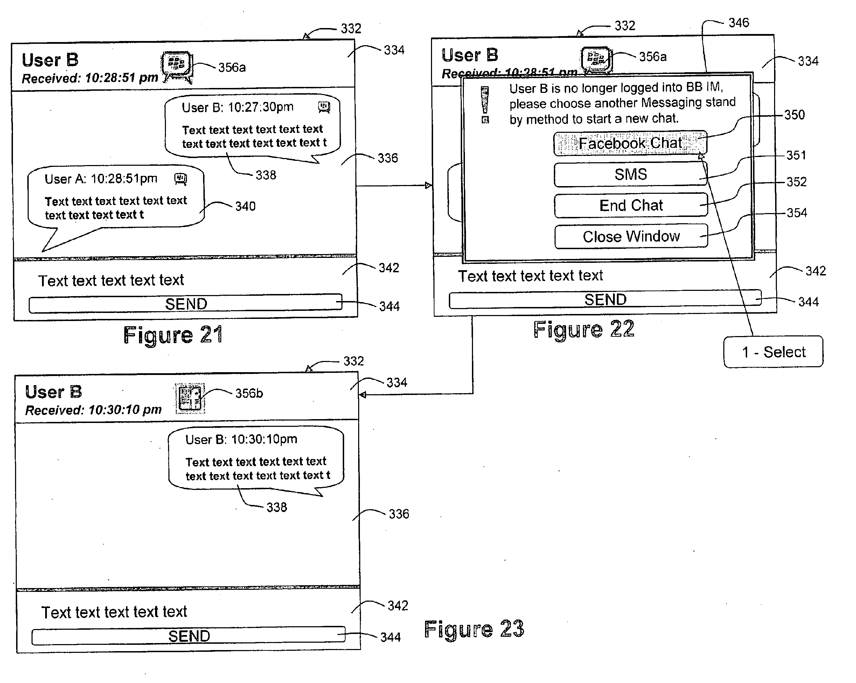

Turning now to Figures 21, 22 and 23, another example of toggling between messaging clients is provided upon detecting an external event regarding the contact with which the user is corresponding. Figure 21 shows a conversation screen 332 between User A and a contact, in this example User B. The conversation screen 332 comprises an information bar 334 which displays the name of the contact, the time at which the last message was sent or received and a current messaging client mode 356. In this example, User A and User B are communicating via the pin-to-pin messaging server 80 as shown by the messaging client mode 356a. For clarity, the suffixes 'a' and 'b' represent specific examples of the messaging client mode 356 for different messaging clients. Below the information bar 334 is a conversation panel 336 showing text messages 338, 340 exchanged between the users. Towards the bottom portion of the screen 332, a text portion 342 is provided for User A to input a message. By selecting the "Send" button 344, the message in the text portion 342 is transmitted to User B over the wireless network 200.

In Figure 22, a standby messaging client window 346 is displayed within the conversation screen 332 and is triggered upon detecting that User B has logged off or been disconnected from the conversation in the current messaging client mode 356, in this example the pin-to-pin messaging mode 356a. When the contact, User B, either purposefully or inadvertently logs off from the conversation, the IM default manager 54 detects the change in the active conversation status, for example, through the active conversation module 212. This change in active conversation status, or more generally change in connectivity information, triggers the display of the standby messaging client window 346, which offers options of available standby messaging clients common to both the user and the logged-off contact. In this example, User A and User B may exchange messages with Facebook™ Chat and SMS, in addition to the pin-to-pin messaging client. The options for Facebook™ Chat and SMS are provided in selection buttons 350 and 351, respectively. Selecting one of these buttons 350, 351 toggles the current messaging client to the desired standby messaging client. Other options include selecting the "End Chat" button 352 to terminate the conversation with User B and thus close the conversation screen 332, and selecting the "Close Window" button 354 to remove the standby IM client window 346 from the display. User A may scroll through and select the options by using a trackball 14a, 14b, trackwheel or touch display 28. In this example, User A selects button 350 to continue chatting with User B in Facebook™ Chat, thereby switching the current messaging client mode 356 from the pin-to-pin messenger to Facebook™ Chat mode 356b as shown in Figure 23.

As can be seen in Figure 23, the current messaging client mode 356b has been updated in the information bar 334 and the conversation screen 334 remains active between User A and User B. This indicates that the current messaging conversation, using the pin-to-pin messaging client, becomes the previous messaging conversation and a new messaging conversation is started utilizing the desired messaging client, in this example Facebook™ Chat. As can also be seen in Figure 23, a portion of information originating from the previous messaging conversation is carried forward into the new messaging conversation. More particularly, the portion of information comprises text data or message data and the times at which the text data was exchanged. This allows the conversation to seamlessly continue between the previous messaging conversation and the new messaging conversation.

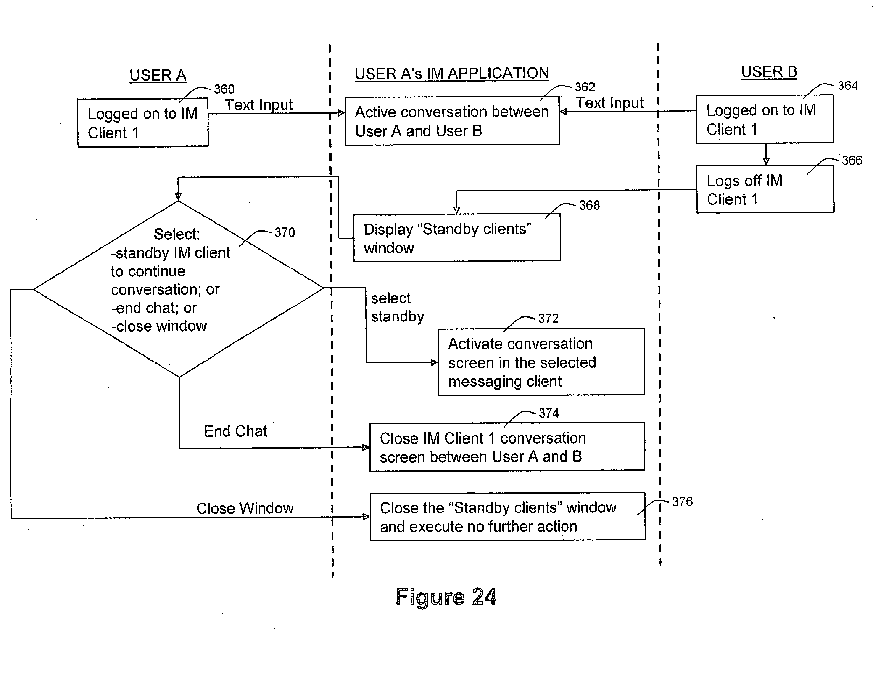

Turning to Figure 24, a flowchart outlines the process of toggling between a current messaging client and a standby messaging client. Initially, User A and User B are both logged on to IM client 1, as shown in step 360 and 364, and User A's IM application 55 is actively exchanging messages with both users at step 362. However, at step 366, User B logs off; this change in status information triggers User A's IM application 55 to display the "standby client" window (step 368). Using the buttons provided in the window, at step 370, User A may select an available standby messaging protocol to continue exchanging messages with User B, or end the conversation with User B, or close the window. Selecting a standby messaging client activates a conversation screen in the selected or desired messaging client (step 372). Selecting a button to end the IM conversation closes the conversation screen between User A and User B, and may take User A back to the unified messaging contact screen 240. Upon closing the "standby client window" at step 376, no further action is taken.

It can be appreciated that the status information for the messaging clients can be monitored for both the user and a contact and thus, the status information may be used to detect whether a user or a contact may have inadvertently or unintentionally logged off from the IM client. In the context of the IM default manager 54, upon detecting that either the user or the contact associated with the current messaging conversation is no longer connected to a current messaging client pertaining to the status information, a list of standby messaging clients is displayed for selecting a desired messaging client.

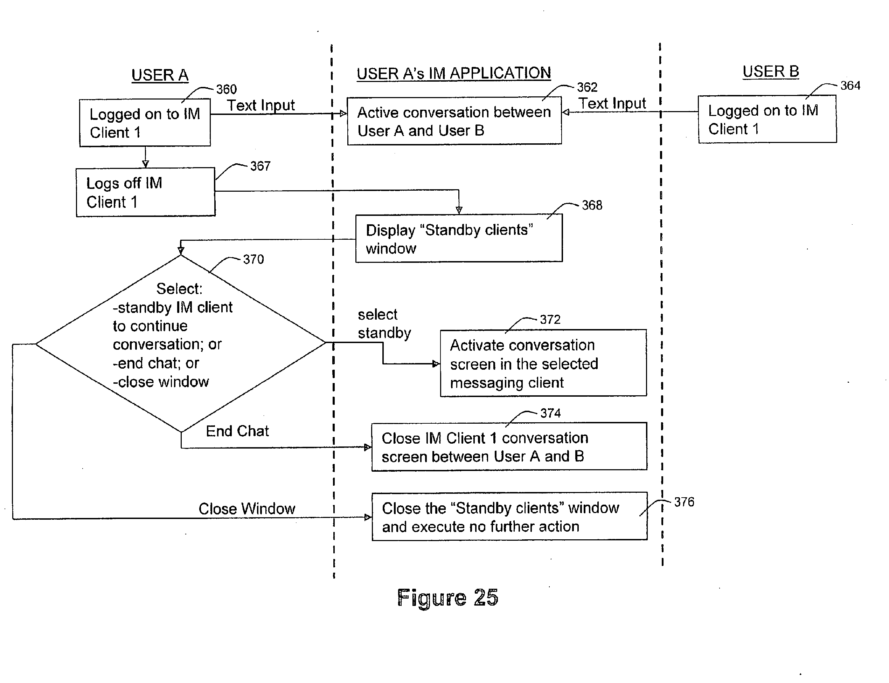

Referring to Figure 25, an alternate method is shown wherein the user may inadvertently or intentionally log off from the IM client, thus triggering the display of the list. When User A is engaged in an active or current conversation with the contact User B, it may be that User A is no longer connected or logs off from IM client 1 (step 367). Upon detecting this event, the User A's IM application 53 would display a "Standby clients" window 368.

The principles of displaying a list of standby messaging clients also applies to external events that trigger navigation to another messaging client according to a set of one or more rules from the rules list 218. The IM default manager 54 may detect an external event corresponding to one or more rules and in response trigger a notification.
In one embodiment, upon detecting an external event, the notification may comprise displaying a list of messaging clients for selection, wherein the display may be similar to the selection box 300 shown in Figure 17. This conveniently allows the user to manage the multiple messaging clients based on external events. For example, when an external event such as a change of location occurs, a corresponding location-based rule triggers the IM default manager 54 to display a list of messaging clients for selecting a desired messaging client.

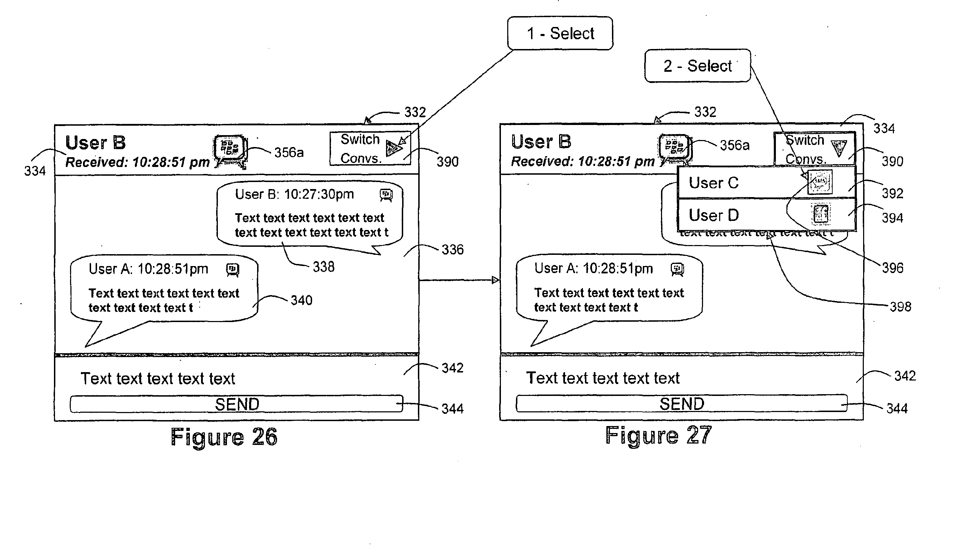

Turning now to Figures 26 through 29, another GUI for a conversation screen 332 is shown and outlines the steps for switching an active designation between messaging clients, wherein the active designation in this embodiment is a conversation designation. In Figure 26, User A is in a conversation with a contact User B using the pin-to-pin IM client. A conversation button 390 is provided in the information bar 334. The button 390 is used to display a list of ancillary active conversations in which User A is participating. It can be appreciated that although in this embodiment the conversation list is a drop-down style list, other types of list configurations are applicable to the IM application 55.

In Figure 26, the conversation button 390, marked "Switch Convs.", is selected to display the conversation list 398 as shown in Figure 27. The conversation list 398 comprises contact listings 392, 394 for User C and User D. In other words, User A is also engaged in an exchange of messages with User C, using SMS, and User D, using Facebook™ Chat. Similar to the contact listings in the contact list 63, the contact listings 392, 396 in Figure 27 each comprise an identification of the contact and an identification of the active messaging client, which is typically an icon. Although not show here, overlaying the identification of the active messaging client is a messaging client panel 260 that may be selected by the user. In this example, User A may want to switch the conversation designation of the messaging client for User C from the current SMS mode to another messaging client. In order to switch the conversation designation, the messaging client panel 260 in the contact listing 392 is highlighted and selected.

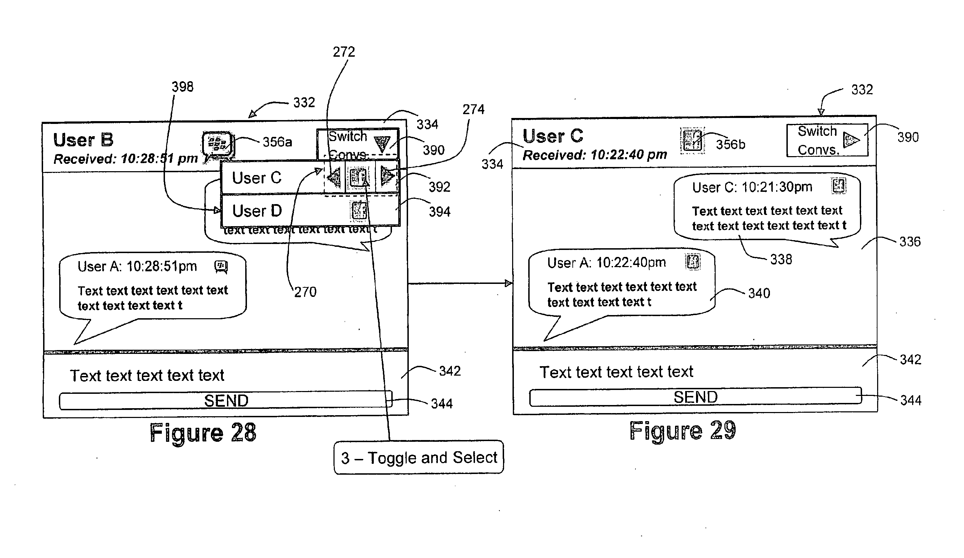

Turning to Figure 28, upon detecting a first input through the selection of the messaging client panel 260, a toggle list 270 is displayed enabling selection of a messaging client from the list of available messaging clients to the contact, User C. In this embodiment, the toggle list 270 displays one available IM client at a time. After scrolling or toggling through the available messaging clients and selecting the desired messaging client, the selection or second input is detected and the selected messaging client is designated as the active conversation messaging client. User A has designated Facebook™ Chat to replace the SMS in the conversation with User C.

After switching the designation of the conversation messaging client for User C, User A may be prompted with the choice to either to seamlessly continue the current conversation (i.e. import text from the previous conversation into the new conversation), or to start a new conversation without importing previous text. In this example, User A has decided to seamlessly continue the conversation as shown in Figure 29, wherein previous text has been imported. In Figure 29, User A and User C continue their conversation in Facebook™ Chat.

Accordingly, mobile devices 100 having default and standby IM client manager 54 can use a unified messaging contact list to quickly toggle to a different default mode of communication. In other words, by associating the available messaging clients with a particular contact, there is provided a mechanism for switching between messaging clients. The unification of messaging clients as herein described also provides a mechanism for switching between messaging clients, either via a prompt or according to user preferences embodied in a set of one or more rules. There is also, as described above, a mechanism for switching a default designation between messaging clients

It will be appreciated that the particular options, outcomes, applications, screen shots and icons shown in the figures and described above are for illustrative purposes only and many other variations can be used according to the principles described.

Although the above has been described with reference to certain specific embodiments, various modifications thereof will be apparent to those skilled in the art as outlined in the appended claims.

## Claims

1. A method for switching between messaging clients (65), said method comprising:
providing on a first communication device (100), a plurality of messaging clients (65) for exchanging messages (68) with one or more other communication devices;
enabling at said first communication device (100) an exchange of messages (68) with a second communication device using one of said plurality of messaging clients (65); and
upon said first communication device (100) detecting that said first and second communication devices are no longer connected by said one of said plurality of messaging clients (65), displaying on said first communication device (100) a list of standby messaging clients (65) to enable selection of another of said plurality of messaging clients (65) to continue said exchange of messages (68).

2. The method according to claim 1 further comprising monitoring connectivity information pertaining to said messaging clients (65) during said exchange of messages (68).

3. The method according to claim 2 wherein said monitoring connectivity information comprises monitoring status information for each said plurality of messaging clients (65) for each contact associated with said first communication device (100).

4. The method according to any one of the preceding claims further comprising starting a new exchange of messages (68) utilizing said another of said messaging clients (65).

5. The method according to claim 4 wherein said new exchange of messages (68) incorporates information associated with said exchange of messages (68) using said one of said plurality of messaging clients (65).

6. The method according to claim 5 wherein said information comprises messages (68) exchanged in a conversation with said second communication device.

7. The method according to any one of the preceding claims wherein said list of standby messaging clients (65) is displayed within a current messaging screen for said one of said plurality of messaging clients (65).

8. The method according to any one of the preceding claims wherein said detecting comprises detecting that said first communication device (100) has logged off said one of said plurality of messaging clients (65).

9. The method according to any one of the preceding claims wherein said detecting comprises detecting that said second communication device has logged off said one of said plurality of messaging clients (65).

10. A computer readable medium comprising computer executable instructions that when executed by a processor of a computing device cause said computing device to perform all the steps of the method according to any one of claims 1 to 9.

11. A mobile device comprising a display, one or more input mechanisms, a processor, a communication sub-system for engaging in instant messaging, and at least one memory, one of said at least one memory storing computer executable instructions for causing said processor to perform all the steps of the method according to any one of claims 1 to 9.

## Patentansprüche

1. Verfahren zum Umschalten zwischen Nachrichtenübermittlungsclients (65), wobei das Verfahren Folgendes umfasst:
Bereitstellen einer Vielzahl von Nachrichtenübermittlungsclients (65) in einer ersten Kommunikationsvorrichtung (100) für den Austausch von Nachrichten (68) mit einer oder mehreren anderen Kommunikationsvorrichtungen;
Aktivieren an der ersten Kommunikationsvorrichtung (100) eines Austauschs von Nachrichten (68) mit einer zweiten Kommunikationsvorrichtung, die einen der Vielzahl von Nachrichtenübermittlungsclients (65) verwendet; und
nachdem die erste Kommunikationsvorrichtung (100) erfasst hat, dass die erste und zweite Kommunikationsvorrichtung nicht mehr durch den einen der Vielzahl von Nachrichtenübermittlungsclients (65) verbunden sind, Anzeigen einer Liste von Ersatz-Nachrichtenübermittlungsclients (65) an der ersten Kommunikationsvorrichtung (100), um die Auswahl eines anderen der Vielzahl von Nachrichtenübermittlungsclients (65) zu ermöglichen und den Austausch der Nachrichten (68) fortzusetzen.

2. Verfahren nach Anspruch 1, das des Weiteren die Überwachung von Konnektivitätsinformationen bezüglich der Nachrichtenübermittlungsclients (65) während des Austausches von Nachrichten (68) umfasst.

3. Verfahren nach Anspruch 2, wobei die Überwachung der Konnektivitätsinformationen die Überwachung von Statusinformationen für jeden der Vielzahl von Nachrichtenübermittlungsclients (65) für jeden Kontakt, der der ersten Kommunikationsvorrichtung (100) zugeordnet ist, umfasst.

4. Verfahren nach einem der vorhergehenden Ansprüche, das des Weiteren den Start eines neuen Austausches von Nachrichten (68) unter Verwendung des anderen der Nachrichtenübermittlungsclients (65) umfasst.

5. Verfahren nach Anspruch 4, wobei der neue Austausch von Nachrichten (68) Informationen bezüglich des Austausches von Nachrichten (68) unter Verwendung des einen der Vielzahl von Nachrichtenübermittlungsclients (65) umfasst.

6. Verfahren nach Anspruch 5, wobei die Informationen Nachrichten (68) umfassen, die während einer Konversation mit der zweiten Kommunikationsvorrichtung ausgetauscht wurden.

7. Verfahren nach einem der vorhergehenden Ansprüche, wobei die Liste von Ersatz-Nachrichtenübermittlungsclients (65) auf einem aktuellen Nachrichtenbildschirm für den einen der Vielzahl von Nachrichtenübermittlungsclients (65) angezeigt wird.

8. Verfahren nach einem der vorhergehenden Ansprüche, wobei die Erfassung umfasst, dass erfasst wird, dass die erste Kommunikationsvorrichtung (100) den einen der Vielzahl von Nachrichtenübermittlungsclients (65) ausgeloggt hat.

9. Verfahren nach einem der vorhergehenden Ansprüche, wobei die Erfassung umfasst, dass erfasst wird, dass die zweite Kommunikationsvorrichtung den einen der Vielzahl von Nachrichtenübermittlungsclients (65) ausgeloggt hat.

10. Computerlesbares Medium, das durch einen Computer ausführbare Befehle umfasst, die, wenn sie von einem Prozessor einer Computervorrichtung ausgeführt werden, die Computervorrichtung veranlassen, alle Schritte des Verfahrens gemäß den Ansprüchen 1 bis 9 auszuführen.

11. Mobile Vorrichtung, die Folgendes umfasst: eine Anzeige, einen oder mehrere Eingabemechanismen, einen Prozessor, ein Kommunikationssubsystem zur Teilnahme an Sofort-Nachrichtenübermittlungen und mindestens einen Speicher, wobei einer des mindestens einen Speichers durch einen Computer ausführbare Befehle speichert, um den Prozessor zu veranlassen, alle Schritte des Verfahrens gemäß den Ansprüchen 1 bis 9 auszuführen.

## Revendications

1. Procédé permettant de commuter entre des clients de messagerie (65), ledit procédé comprenant les étapes suivantes :
la fourniture, sur un premier dispositif de communication (100), d'une pluralité de clients de messagerie (65) permettant d'échanger des messages (68) avec un ou plusieurs autres dispositifs de communication ;
l'activation, sur ledit premier dispositif de communication (100), d'un échange de messages (68) avec un deuxième dispositif de communication à l'aide d'un client parmi ladite pluralité de clients de messagerie (65) ; et
lorsque ledit premier dispositif de communication (100) détecte que lesdits premier et
deuxième dispositifs de communication ne sont plus connectés par ledit client parmi ladite pluralité de clients de messagerie (65), l'affichage sur ledit premier dispositif de communication (100) d'une liste de clients de messagerie en attente (65) afin de permettre la sélection d'un autre client parmi ladite pluralité de clients de messagerie (65) et
poursuivre ainsi ledit échange de messages (68).

2. Procédé selon la revendication 1, comprenant en outre le suivi des informations de connectivité concernant lesdits clients de messagerie (65) au cours dudit échange de messages (68).

3. Procédé selon la revendication 2, dans lequel ledit suivi des informations de connectivité comprend le suivi des informations d'état de chaque dite pluralité de clients de messagerie (65) pour chaque contact associé audit premier dispositif de communication (100).

4. Procédé selon l'une quelconque des revendications précédentes, comprenant en outre le démarrage d'un nouvel échange de messages (68) à l'aide dudit autre client parmi lesdits clients de messagerie (65).

5. Procédé selon la revendication 4, dans lequel ledit nouvel échange de messages (68) intègre des informations associées audit échange de messages (68) à l'aide dudit client parmi ladite pluralité de clients de messagerie (65).

6. Procédé selon la revendication 5, dans lequel lesdites informations comprennent des messages (68) échangés au cours d'une conversation avec ledit deuxième dispositif de communication.

7. Procédé selon l'une quelconque des revendications précédentes, dans lequel ladite liste de clients de messagerie en attente (65) s'affiche sur un écran de messagerie actuelle pour ledit client parmi ladite pluralité de clients de messagerie (65).

8. Procédé selon l'une quelconque des revendications précédentes, dans lequel ladite détection comprend la détection de la déconnexion dudit premier dispositif de communication (100) dudit client parmi ladite pluralité de clients de messagerie (65).

9. Procédé selon l'une quelconque des revendications précédentes, dans lequel ladite détection comprend la détection de la déconnexion dudit deuxième dispositif de communication dudit client parmi ladite pluralité de clients de messagerie (65).

10. Support lisible par ordinateur comprenant des instructions pouvant être exécutées par ordinateur qui, lorsqu'elles sont exécutées par un processeur d'un dispositif informatique, amène ledit dispositif informatique à mettre en oeuvre toutes les étapes du procédé selon l'une quelconque des revendications 1 à 9.

11. Dispositif mobile comprenant un écran, un ou plusieurs mécanismes de saisie, un processeur, un sous-système de communication permettant des activités de messagerie instantanée et au moins une mémoire, l'une parmi ladite au moins une mémoire stockant des instructions pouvant être exécutées par ordinateur afin d'amener ledit processeur à mettre en oeuvre toutes les étapes du procédé selon l'une quelconque des revendications 1 à 9.
